# EUROPÄISCHE PATENTANMELDUNG

(11) **EP 3 552 998 A2**
(43) Veröffentlichungstag der Anmeldung: **16.10.2019**
(21) Anmeldenummer: 19168741.7
(22) Anmeldetag: 11.04.2019
(51) Int. Cl.: B65G 65/00, B66F 9/08, B65G 65/23

(54) **VORRICHTUNG ZUM BEWEGEN VON LADUNGSTRÄGERN, ADAPTER ZUM AUFNEHMEN VON LADUNGSTRÄGERN SOWIE TRANSPORTWAGEN ZUM AUFNEHMEN UND TRANSPORTIEREN VON LADUNGSTRÄGERN**

(30) Priorität: 12.04.2018 DE 202018102001 U; 12.04.2018 DE 202018102002 U
(71) Anmelder: Aberu GmbH, 78647 Trossingen (DE)
(72) Erfinder: Keller, Friedhelm, 78647 Trossingen (DE)
(74) Vertreter: Westphal, Mussgnug & Partner Patentanwälte mbB

(57) **Zusammenfassung**

Die vorliegende Erfindung betrifft eine Vorrichtung zum Bewegen von Ladungsträgern (12), in welchen ein Ladegut einbringbar ist, umfassend eine Führungssäule (14) mit einem bodennahen Ende (15) und einem bodenfernen Ende (17), einen Schlitten (28), welcher entlang der Führungssäule (14) bewegbar ist und mit welchem zumindest ein Adapter (50) zum Aufnehmen von Ladungsträgern (12) verbindbar ist, zumindest ein entlang der Führungssäule (14) verlaufendes Abstützmittel (34), ein im Schlitten (28) angeordnetes oder mit dem Schlitten zusammenwirkendes und mittels einer Antriebseinrichtung (32) antreibbares Ritzel (62), welches zum Bewegen des Schlittens (28) entlang der Führungssäule (14) formschlüssig in das Abstützmittel (34) eingreift, und eine im Bereich des bodennahen Endes (15) an der Führungssäule (14) befestigte erste Umlenkrolle (42) zum Umlenken des Abstützmittels (34).

## Beschreibung

Die vorliegende Erfindung betrifft eine Vorrichtung zum Bewegen von Ladungsträgern. Des Weiteren betrifft die Erfindung einen Adapter zum Aufnehmen von Ladungsträgern sowie einen Transportwagen zum Aufnehmen und Transportieren von Ladungsträgern.

Ladungsträger werden in der Logistik sehr häufig verwendet, um ein Ladegut zu transportieren und zu lagern. Die am häufigsten anzutreffenden Ausführungsformen von Ladungsträgern sind Kisten und Paletten. Die Kisten werden häufig auch als Kleinladungsträger (KLT) bezeichnet. Der wesentliche Vorteil der Ladungsträger ist, dass diese standardisiert und mit Greifeinheiten unabhängig von der Form des Ladeguts ergriffen und bewegt werden können, ohne dass es hierzu besonderer Anpassungen der Greifeinheiten bedarf. Bei der Verwendung von Kisten ergibt sich die Möglichkeit, diese zu stapeln, wodurch auf einer geringen Fläche eine große Menge des Ladeguts gelagert und transportiert werden kann.

Zu den Ladungsträgern zählen auch sogenannte Trays, die tablettförmig ausgebildet sind und meist mehrere Aufnahmeräume aufweisen, in welche typischerweise ein Ladegut, insbesondere ein Stückgut, abgelegt werden kann. Die Aufnahmeräume sind durch Wände voneinander getrennt, so dass ein Ladegut, welches in einem Aufnahmeraum abgelegt ist, nicht in Berührung mit einem anderen Ladegut kommen kann. Aus derartigen Berührungen resultierende Beschädigungen des Ladeguts können unter Verwendung von Trays verhindert werden. Derartige Trays werden auch als Blister bezeichnet. Auch wenn die Trays ebenfalls Ladungsträger sind, sollen im Folgenden unter Ladungsträger die kistenförmigen Ladungsträger als Abgrenzung zu den tablettförmigen Trays verstanden werden. Wenn nicht anders angegeben, gelten die folgenden Ausführungen für Ladungsträger und Trays Gleichermaßen.

Eine besondere Situation ergibt sich beim Befüllen und Entleeren der Ladungsträger: Ein von einer Werkzeugmaschine fertig bearbeitetes Werkstück muss weitertransportiert werden, beispielsweise zu einem Lager, wo das Werkstück gelagert und von wo aus es versendet werden kann. Je nach Ausführungsform der Werkzeugmaschine wirft diese das fertig bearbeitete Werkstück aus oder legt es in einem Abgabebereich ab. Die Werkzeugmaschine kann so eingerichtet werden, dass sie das fertig bearbeitete Werkstück direkt in den Ladungsträger ablegt. Ist der Ladungsträger voll, muss dieser gegen einen unbefüllten Ladungsträger ausgetauscht werden. Sofern kein Förderband vorhanden ist, wird dieser Austausch manuell durchgeführt, wobei der befüllte Ladungsträger beispielsweise auf einen Transportwagen oder einem Stapelplatz abgelegt oder abgestellt wird. In vielen Fällen wiegen die befüllten Ladungsträger bis zu 70 kg, so dass das manuelle Heben und Ablegen eine Gesundheitsgefährdung für den betreffenden Mitarbeiter darstellt.

Um das Heben und Ablegen zu erleichtern, sind verschiedene Hubvorrichtungen entwickelt worden. Beispielsweise in der DE 202 16 192 U1 ist eine Hubvorrichtung offenbart, mit welcher ein Ladungsträger angehoben und abgesenkt werden kann. Hierbei muss der Ladungsträger aber manuell auf die Aufnahme gestellt und von ihr entnommen werden. Die DE 20 2017 001 339 U1 offenbart ebenfalls eine Hubvorrichtung, die mit einem Magazin gekoppelt ist, in welchem die vollen Ladungsträger abgelegt und leere Ladungsträger entnommen werden können. Ist das Magazin voll, wird es weggefahren und gegen ein leeres ausgetauscht. Da das Magazin einen bestimmten Platz benötigt, lässt es sich nicht überall abstellen. Zudem lassen sich die dort verwendeten Ladungsträger nicht stapeln. Die DE 10 2010 040 152 A1 offenbart eine Vorrichtung zum Umsetzen von befüllten Ladungsträgern von einem Transportband auf einen Transportwagen. Die Vorrichtung ist nicht dazu eingerichtet, unbefüllte Ladungsträger zu bewegen. Zudem setzt die Vorrichtung das Vorhandensein eines Transportbands voraus.

Nicht nur bei der in der DE 20 2017 001 339 U1 gezeigten Hubvorrichtung wird ein Schlitten entlang einer Führungssäule bewegt, wobei ein Adapter am Schlitten befestigt werden kann, welcher die Ladungsträger aufnimmt. Der Schlitten wird von einer sich bewegenden Kette bewegt, die von einem sich drehenden Ritzel angetrieben wird. Darüber hinaus durchläuft die Kette mindestens ein Umlenkritzel, welches von der Kette gedreht wird. Sowohl das Ritzel als auch das Umlenkritzel greifen in die Kette ein. Insbesondere im Bereich des Ritzels und des Umlenkritzels besteht die Gefahr für einen Benutzer, dass er mit den Fingern zwischen die Kette und das Ritzel oder das Umlenkritzel gerät, wodurch sich der Benutzer schwere Verletzungen zuziehen kann. Zwar kann die Kette von einem Gehäuse abgeschirmt werden, allerdings muss der Schlitten mit dem Adapter verbindbar sein, weshalb das Gehäuse eine schlitzförmige Ausnehmung aufweist. In vielen Fällen verläuft die Kette so, dass sie direkt durch die schlitzförmige Ausnehmung zugänglich ist und die oben geschilderte Gefahr für die Finger des Benutzers nicht wirksam vermieden werden kann. Darüber hinaus geht auch von der sich bewegenden Kette als solche eine Gefahr für die Finger eines Benutzers aus, da die Kette häufig scharfkantige Kettenglieder aufweist, an denen sich der Benutzer seine Finger schneiden kann.

Wie bereits erläutert, wird das Ladegut in Ladungsträgern transportiert und gelagert. Beim Bewegen der Ladungsträger mittels einer zuvor beschriebenen Vorrichtung werden die Ladungsträger in den bereits erwähnten Adapter aufgenommen und zusammen mit dem Adapter bewegt. Um eine sichere Aufnahme des Ladungsträgers im Adapter zu gewährleisten und insbesondere ein Verrutschen des Ladungsträgers im Adapter oder ein Herausfallen des Ladungsträgers aus dem Adapter zu verhindern, muss die Form und die Größe des Adapters an die Form und die Größe des Ladungsträgers angepasst werden. Diese Anforderung führt in der Praxis dazu, dass ein Adapter nur für einen Typ oder nur für sehr wenige Typen von Ladungsträgern verwendbar ist. Es kann aber durchaus sein, dass innerhalb des innerbetrieblichen Transports mehrere Typen von Ladungsträgern verwendet werden, so dass die Adapter nicht mehr passen und ausgetauscht werden müssen, was im laufenden Betrieb nicht machbar ist. Hierdurch werden der Anwendungsbereich und die Flexibilität von bekannten Vorrichtungen deutlich eingeschränkt.

Wie ebenfalls erwähnt, dienen die Ladungsträger nicht nur für den Transport des Ladeguts, sondern auch zum Lagern des Ladeguts. Eine temporäre Lagerung des Ladeguts innerhalb des innerbetrieblichen Transports kann beispielsweise dann notwendig sein, wenn die fertig bearbeiteten Ladegüter in einem Lager gelagert werden, welches sich mehr oder weniger weit weg von den Werkzeugmaschinen befindet. In diesem Fall werden die Ladungsträger auf einem Transportwagen abgelegt und zwischengelagert. Wenn der Transportwagen voll beladen ist, wird dieser in das Lager geschoben. Aber auch hier tritt die für die Adapter beschriebene Situation auf, wonach die Ladungsträger nur dann sicher im Transportwagen aufgenommen werden können, wenn die Größe der Ladungsträger zu den Größen der Ablageplätze des Transportwagens passt. Wenn innerhalb eines innerbetrieblichen Fördersystems mehrere Typen von Ladungsträgern verwendet werden, müssen passende Transportwagen vorgehalten werden, wodurch die Transportabläufe komplexer, aufwendiger und daher fehleranfälliger und teurer werden.

Aufgabe einer Ausführungsform der vorliegenden Erfindung ist es, eine Vorrichtung zum Bewegen von Ladungsträgern zu schaffen, mit welcher der oben geschilderten Situation begegnet werden kann. Insbesondere soll die Vorrichtung so gestaltet sein, dass die Gefahr von Verletzungen für einen Benutzer gegenüber bekannten derartigen Vorrichtungen deutlich verringert wird. Des Weiteren liegt einer Ausführungsform der vorliegenden Erfindung die Aufgabe zugrunde, einen Adapter und einen Transportwagen zu schaffen, welche für unterschiedlich große Ladungsträger verwendbar sind.
Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft eine Vorrichtung zum Bewegen von Ladungsträgern, in welchen ein Ladegut einbringbar ist, umfassend eine Führungssäule, einen Schlitten, welcher entlang der Führungssäule bewegbar ist und mit welchem zumindest ein Adapter zum Aufnehmen von Ladungsträgern verbindbar ist, zumindest ein entlang der Führungssäule verlaufendes Abstützmittel, und ein im Schlitten angeordnetes oder mit dem Schlitten zusammenwirkendes und mittels einer Antriebseinrichtung antreibbares Ritzel, welches zum Bewegen des Schlittens entlang der Führungssäule formschlüssig in das Abstützmittel eingreift.

Unter einem Ritzel kann ein Zahnrad verstanden werden, das Ritzel kann aber auch als ein Rad ausgestaltet sein, welches ein bestimmtes Profil aufweist, das formschlüssig mit dem Abstützmittel zusammenwirkt. Das Abstützmittel stellt eine Art Zahnstange dar. Auf jeden Fall muss ein Durchrutschen des Ritzels gegenüber dem Abstützmittel verhindert werden, da sich sonst der Schlitten unkontrollierbar entlang der Führungssäule bewegen würde. Das Abstützmittel ist flexibel und insbesondere als ein Seil, eine Kette oder als ein Riemen ausgebildet. Die flexible Ausgestaltung des Abstützmittels insbesondere als Kette, Seil oder Riemen hat den Vorteil, dass die Führungssäule auch gebogene Abschnitte aufweisen kann, ohne das Abstützmittel auf die bogenförmigen Abschnitte anpassen zu müssen. Aufgrund der Flexibilität der Kette, des Seils oder des Riemens können diese für unterschiedlich ausgestaltete Führungssäulen verwendet werden. Zudem kann die Anordnung des Ritzels freier gewählt werden, da das unabhängig von der Position mit diesem zusammenwirken kann. Die Gestaltungsfreiheit der Antriebseinrichtung wird hierdurch erhöht.

Das Abstützmittel kann ortsfest ausgebildet sein, so dass das Ritzel das einzige angetriebene Teil darstellt, um den Schlitten entlang der Führungssäule zu bewegen. Das Ritzel lässt sich deutlich besser mit einem Gehäuse abschirmen als eine sich bewegende Kette, so dass die Gefahr, dass sich der Benutzer seine Finger verletzt, in der vorschlagsgemäßen Ausführungsform der vorliegenden Vorrichtung deutlich vermindert werden kann. Die Gefahr, die von einer sich bewegenden Kette für den Benutzer ausgeht, besteht ebenfalls nicht mehr. Dennoch ist eine Ausführungsform der Vorrichtung nicht ausgeschlossen, bei welcher das Abstützmittel beweglich angeordnet ist. In dieser Ausführungsform ist das Ritzel nicht im Schlitten, sondern außerhalb hiervon angeordnet und wirkt über die Kette, dem Riemen oder dem Seil mit dem Schlitten zusammen. Der Schlitten ist fest mit der Kette, dem Riemen oder dem Seil verbunden, wobei das Ritzel das Abstützmittel antreibt.

Wie eingangs erwähnt, dient die vorliegende Vorrichtung hauptsächlich zum Anheben und Absenken von Ladegütern. Im bestimmungsgemäßen Gebrauch ist daher die Führungssäule im Wesentlichen senkrecht ausgerichtet, so dass sie ein bodennahes und ein bodenfernes Ende aufweist. Vorschlagsgemäß ist im Bereich des bodennahen Endes eine erste Umlenkrolle zum Umlenken des Abstützmittels vorgesehen. Wie erwähnt, wird das flexible Abstützmittel unabhängig von der Position des Ritzels zu diesem hin geführt, wobei sich die Ausrichtung des flexiblen Abstützmittels je nach Position des Ritzels ändert. Insbesondere dann, wenn das Abstützmittel ortsfest an der Führungssäule befestigt ist, weicht jedoch die Ausrichtung des Abstützmittels umso stärker von der Bewegungsrichtung des Schlittens ab, je näher sich das Ritzel dem bodennahen Befestigungspunkt nähert. Ab einem gewissen Maß ist keine Bewegung des Schlittens zum bodennahen Ende hin mehr möglich. Infolgedessen lässt sich der Schlitten nur bis zu einem gewissen Abstand zum bodennahen Ende der Führungssäule hin bewegen, was insbesondere dann problematisch sein kann, wenn Ladungsträger auf dem Boden abgelegt oder von diesem angehoben werden können. Aufgrund der vorschlagsgemäß im Bereich des bodennahen Endes an der Führungssäule befestigten ersten Umlenkrolle lässt sich das Abstützmittel so zum Ritzel führen, dass der Schlitten bis zum Boden oder nahezu bis zum Boden bewegt werden kann. Das Ablegen und das Aufnehmen von Ladungsträger auf dem Boden bzw. vom Boden ist daher sichergestellt.

Bei einer weitergebildeten Ausführungsform weist das Abstützmittel ein erstes Ende und ein zweites Ende auf, wobei das Abstützmittel am ersten Ende und/oder am zweiten Ende mittels eines elastischen Elements mit der Vorrichtung verbunden ist. In dieser Ausführungsform ist das Abstützmittel ortsfest an der Führungssäule befestigt. Mittels des elastischen Elements, beispielsweise einer Feder, kann zwar eine gewisse Führung der Kette oder des Riemens bewirkt werden, so dass sich der Verlauf der Kette oder des Riemens nicht zufällig einstellt. Allerdings ist die Führung noch ausreichend flexibel, so dass die Gefahr von Fehleingriffen und von einem Verklemmen des Ritzels gegenüber dem Abstützmittel verringert wird. Dennoch können auch bogenförmige Abschnitte der Führungssäule durchlaufen werden. Weiterhin wird der hieraus resultierenden erhöhten Abnutzung sowie einer erhöhter Geräuschentwicklung entgegengewirkt.

Bei einer weiteren Ausführungsform kann die Führungssäule einen im Wesentlichen senkrecht verlaufenden ersten Abschnitt und einen kreisringsektorförmigen zweiten Abschnitt aufweisen. Es besteht in dieser Ausführungsform nicht nur die Möglichkeit, Ladungsträger zwischen zwei unterschiedlichen Niveaus anzuheben oder abzusenken, sondern die Ladungsträger auch auszuschütten. Zwar kann das auch dadurch geschehen, dass der Adapter um eine Drehachse drehbar am Schlitten befestigt wird, allerdings fällt dabei zumindest ein Teil des Ladeguts hierbei weitgehend ungebremst aus dem Ladungsträger. Wenn das Ausschütten durch Bewegen des mit dem Schlitten verbundenen Adapters entlang des kreissektorförmigen oder gebogenen zweiten Abschnitts der Führungssäule geschieht, kann einerseits die Mechanik der Vorrichtung einfach gehalten werden, da kein Antrieb für die Drehung des Adapters gegenüber des Schlittens vorgesehen werden muss. Andererseits wird das Ladegut schonender aus den Ladungsträgern ausgeschüttet, da weiter oben liegendes Ladegut auf weiter unten liegendem Ladegut abrollt und folglich im Vergleich zu einem Herausfallen im Ladungsträger gebremst wird.

Bei einer weitergebildeten Ausführungsform ist im oder am zweiten Abschnitt zumindest ein Umlenkabschnitt angeordnet, mit welchem das Abstützmittel derart umlenkt wird, dass das Abstützmittel im Wesentlichen der Form des zweiten Abschnitts folgt. Wie erwähnt, ist das Abstützmittel flexibel, so dass es sich je nach Position des Ritzels zu diesem ausrichtet. Im Idealfall wirkt die vom Ritzel und von der Antriebseinrichtung aufgebrachte und über das Abstützmittel in den Schlitten eingeleitete Kraft zum Bewegen des Schlittens parallel zum Verlauf der Führungssäule. Wenn jedoch der Verlauf des Abstützmittels zu stark von dem Verlauf der Führungssäule abweicht, was insbesondere im zweiten Abschnitt der Fall sein kann, steigt der nicht parallel zum Verlauf der Führungssäule wirkende Anteil der auf den Schlitten wirkenden Kraft an. Übersteigt dieser Anteil ein bestimmtes Maß, so kann es zu einem Verklemmen des Schlittens an der Führungssäule kommen. Darüber hinaus kann der Anteil der Kraft, mit welcher der Schlitten bewegt wird, zu klein sein, um diesen tatsächlich bewegen zu können. Mit dem Umlenkabschnitt wird das Abstützmittel so geführt, dass es dem Verlauf der Führungssäule im zweiten Abschnitt zumindest annäherungsweise folgt. Die auf den Schlitten wirkende Kraft wirkt daher zumindest annäherungsweise parallel zum Verlauf der Führungssäule, so dass zum einen die Gefahr des Verklemmens reduziert und zum anderen die Kraft zumindest größtenteils zum Bewegen des Schlittens verwendet wird.

Gemäß einer weiteren Ausführungsform ist im zweiten Abschnitt eine Zahnstange angeordnet, in welche ein mit der Antriebseinrichtung antreibbares weiteres Ritzel formschlüssig eingreift.

Wie erwähnt, werden der Schlitten und der mit ihm verbundene Adapter im zweiten Abschnitt geschwenkt, so dass der im Adapter aufgenommene Ladungsträger auf für das Ladegut schonende Weise entleert wird. Die Entleerung kann beispielsweise dadurch noch schonender durchgeführt werden, wenn der Schlitten im zweiten Bereich nach auf das Ladegut abgestimmten Bewegungsprofilen bewegt wird. Diese Bewegungsprofile können beispielsweise Vor- und Rückwärtsbewegungen und Stopps beinhalten, die in genau definierten Bereichen und Positionen erfolgen sollen. Die Verwendung einer Zahnstange im zweiten Bereich, in welches das weitere Ritzel eingreift, ermöglicht es, derartige Bewegungsprofile mit einer hohen Präzision durchzuführen. Der Eingriff des anderen Ritzels in das Abstützmittel bleibt erhalten, so dass ein weitgehend unterbrechungsfreier und sanfter Übergang vom ersten in den zweiten Abschnitt gewährleistet ist.

Eine weitergebildete Ausführungsform zeichnet sich dadurch aus, dass der zweite Abschnitt ein freies Ende aufweist, wobei im Bereich des freien Endes ein Leitblech zum Führen des Ladeguts beim Entleeren aus dem Ladungsträger angeordnet ist. Ein Führen des ausgeschütteten Ladeguts verhindert einerseits das unkontrollierte Herausfallen und hieraus resultierende Beschädigungen des Ladeguts und ermöglicht andererseits ein genaueres Umfüllen in andere Aufnahmebehälter.

Nach Maßgabe einer weiteren Ausführungsform umfasst zumindest der erste Abschnitt der Führungssäule eine Anzahl von identischen Unterabschnitten. Die Führungssäule kann diesbezüglich modular aufgebaut und folglich ohne größeren Aufwand an verschiedene Höhen angepasst werden. Beispielsweise kann die Führungssäule aus mehreren Unterabschnitten bestehen, die eine Länge von 1 m aufweisen. Folglich kann die Höhe der Führungssäule in 1 m-Schritten angepasst werden. Wenn Zwischenhöhen erforderlich sind, muss nur einer der Unterabschnitte angepasst werden. Zum Verbinden der Unterabschnitte können identisch ausgebildete Verbindungselemente verwendet werden, so dass der Verbindungsvorgang einfach gehalten werden kann.

Eine weitere Ausführungsform zeichnet sich dadurch aus, dass die Führungssäule im Querschnitt H-förmig, T-förmig oder halb-H-förmig ausgebildet ist. Derartige Querschnitte weisen ein vergleichsweise hohes Flächenträgheitsmoment auf, so dass die so gestaltete Führungssäule ein hohes Biegemoment aufnehmen kann. Wenn die Führungssäule den kreissektorförmigen zweiten Abschnitt aufweist, wirken besonders hohe Biegemomente auf die Führungssäule, die in dieser Ausführungsform gut aufgenommen werden können, ohne dass die Führungssäule besonders groß dimensioniert werden müsste. Folglich kann Material eingespart und das Gewicht der Führungssäule in Grenzen gehalten werden. Dabei kann die Führungssäule auch Hohlräume aufweisen, so dass auch Hohlprofile zum Herstellen der Führungssäule verwendet werden können.

Eine weitere Ausführungsform ist dadurch gekennzeichnet, dass die H-förmig oder halb-H-förmig ausgestaltete Führungssäule zumindest zwei parallel zueinander verlaufende Schenkel aufweist, zwischen denen eine Anzahl von Sicherungsabschnitten angeordnet ist. Die Sicherungsabschnitte können beispielsweise als Sicherungsbolzen, Sicherungsstangen oder dergleichen ausgebildet sein. Mit den zwischen den Schenkeln verlaufenden Sicherungsabschnitten kann die Führungssäule weiter versteift werden, so dass noch höhere Biegemomente aufgenommen werden können. Auch in dieser Ausführungsform kann Material eingespart und das Gewicht der Führungssäule in Grenzen gehalten werden.

In einer weiteren Ausführungsform kann die Vorrichtung eine mit dem Schlitten zusammenwirkende oder im Schlitten angeordnete Sicherheitseinrichtung aufweisen, die ein Sicherungselement umfasst, welches für den Fall, dass sich der Schlitten nicht mehr am Abstützmittel abstützen kann, den Schlitten an der Führungssäule feststellt. Das Sicherungselement kann beispielsweise eine Keilbremse sein, die auslöst, wenn sich der Schlitten nicht mehr am Abstützmittel abstützen kann. Die Sicherheitseinrichtung verhindert, dass in diesem Fall sich der Schlitten ungebremst entlang der Führungssäule bewegen kann und zum Boden fällt. Hieraus resultierende Beschädigungen an der Vorrichtung und Gefahren für die Benutzer der Vorrichtung können hierdurch ausgeschlossen werden. Die Sicherungseinrichtung kann ebenfalls nach Art einer Sperrklinke ausgebildet sein, welche in eine Sperrverzahnung eingreift, wobei ein Anheben des Schlittens immer möglich ist und ein Absenken verhindert wird. Um den Schlitten absenken zu können, muss die Sperrklinke in eine freigebende Stellung bewegt werden, beispielsweise mit der Vorspannkraft des belasteten Abstützmittels. Diese Vorspannkraft geht bei einem Reißen des Abstützmittels verloren, so dass die Sperrklinke in eine sperrende Stellung bewegt wird, in welcher die Sperrklinke in die Sperrverzahnung eingreift.

Bei einer weiteren Ausführungsform ist das Sicherungselement gegenüber der Kette oder dem Riemen mittels eines Vorspannmittels vorgespannt. Für den Fall, dass die Kette, das Seil oder der Riemen reißt, wirkt das Sicherungselement zum Feststellen des Schlittens an der Führungssäule mit zumindest einem der Sicherungsabschnitte zusammen. Die Sicherungsabschnitte haben neben der bereits erwähnten versteifenden Wirkung in dieser Ausführungsform zudem noch die Funktion, den Schlitten aufzufangen, wenn die Kette oder der Riemen reißt. Solange die Kette oder der Riemen intakt ist, wird das Sicherungselement in einer Stellung gehalten, in welcher es nicht in die Sicherungsabschnitte eingreifen kann. Sobald die Kette oder der Riemen reißt, wird das Sicherungselement aufgrund der dann fehlenden Gegenkraft aufgrund der Federkraft in eine Stellung gestellt, in welcher das Sicherungselement in eine der Sicherungsabschnitte eingreifen kann. Wie erwähnt, kann die Führungssäule auch Hohlräume aufweisen, wodurch sich Gewicht einsparen lässt, ohne dass das Flächenträgheitsmoment merklich abnehmen würde. In diesem Fall können die Sicherungsabschnitte auch mit in die Hohlräume mündenden Durchgangsöffnungen realisiert sein. Diese Ausführungsform der Sicherheitseinrichtung lässt sich einfach bereitstellen und stellt eine hohe Zuverlässigkeit bereit. Als Vorspannmittel können beispielsweise eine Feder oder ein Gegengewicht verwendet werden.

Eine weitere Ausführungsform ist dadurch gekennzeichnet, dass die Vorrichtung ein Fahrwerk umfasst, mit welchem die Vorrichtung verfahrbar ist. Das Fahrwerk umfasst hierzu geeignete Antriebsmittel. In dieser Ausführungsform kann die Vorrichtung nicht nur zum Heben und Absenken der Ladungsträger verwendet werden, sondern auch zu deren Transport von einer ersten Position in eine zweite Position. Die Vorrichtung kann in ein fahrerloses Transportsystem eingebunden werden, wodurch die Einsatzmöglichkeiten erheblich vergrößert werden.

Bei einer weiteren Ausführungsform umfasst der Adapter eine erste Seitenwand und eine zweite Seitenwand, die im Wesentlichen parallel zueinander verlaufen, sowie einen Auflageabschnitt, auf welchem zumindest ein Ladungsträger auflegbar ist, wobei zumindest eine der Seitenwände zur anderen der Seitenwände hin und von dieser weg bewegbar ist. Die vorliegende Erfindung betrifft aber auch den Adapter als solchen losgelöst von der Vorrichtung.

Wie zuvor erläutert, wird der Schlitten entlang einer Führungssäule bewegt, wobei der Adapter am Schlitten befestigt werden kann, welcher die Ladungsträger aufnimmt. Beim Bewegen des Adapters zusammen mit dem Schlitten entlang der Führungssäule besteht die Gefahr, dass der im Adapter aufgenommene Ladungsträger verrutscht oder sogar aus dem Adapter herausfällt. Aus beiden Fällen können sich mehr oder weniger starke Nachteile für den Transport des im Ladungsträger angeordneten Ladeguts ergeben. Dadurch, dass zumindest eine der Seitenwände zur anderen der Seitenwände hin und von dieser weg bewegbar ist, kann der Abstand zwischen den Seitenwänden des Adapters so gewählt werden, dass er der Länge oder der Breite der verwendeten Ladungsträger entspricht. Ein Verrutschen der Ladungsträger wird hierdurch zumindest in Bezug auf die Seitenwände vermieden. Zumindest eine der Seitenwände kann mit einer Vorspanneinrichtung zusammenwirken und der Abstand zwischen den Seitenwänden etwas größer sein als die Länge oder die Breite der Ladungsträger, so dass die betreffende Seitenwand beim Einbringen der Ladungsträger in den Adapter etwas vorgespannt wird. Folglich wirkt eine bestimmte Reibkraft zwischen dem Ladungsträger und der Seitenwand, welche ein Verrutschen und insbesondere ein Herausfallen der Ladungsträger aus dem Adapter weitgehend verhindert.

Nach einer weiterentwickelten Ausführungsform weist der Adapter eine Verstelleinrichtung auf, mit welcher zumindest eine der Seitenwände relativ zur anderen der Seitenwände bewegbar ist. Mit der Verstelleinrichtung kann der Abstand zwischen den Seitenwänden im Betrieb des Adapters schnell und flexibel verstellt werden. Je nach Einsatzgebiet des Adapters kann es sein, dass Ladungsträger mit unterschiedlichen Größen für den Transport des Ladeguts verwendet werden. Wenn ein Ladungsträger mit sich vom vorhergehenden Ladungsträger unterscheidenden Abmessungen vom Adapter aufgenommen werden soll, kann eine mittels der Verstelleinrichtung eine automatische Anpassung des Abstands der Seitenwände vorgenommen werden. Eine Information über die Abmessungen des betreffenden Ladungsträgers kann beispielsweise mit einem am Ladungsträger angebrachten und von einer Steuereinheit auslesbaren RFID-Chip übermittelt werden. Die Steuereinheit aktiviert die Verstelleinrichtung entsprechend. Folglich lässt sich der Adapter sehr flexibel einsetzen.

In einer weiteren Ausführungsform umfasst der Adapter einen Sensor zum Erkennen der Präsenz eines Ladungsträgers im Adapter und/oder in der unmittelbaren Umgebung des Adapters. Dieser Sensor kann beispielsweise nach Art einer Lichtschranke ausgebildet sein. Die Fähigkeit des Adapters, die Präsenz eines Ladungsträgers im Adapter oder in der unmittelbaren Umgebung zu erkennen, kann für verschiedene Zwecke verwendet werden. Beispielsweise kann die Verstellung des Abstands der Seitenwände in Abhängigkeit der Präsenz eines Ladungsträgers erfolgen. Zudem kann das Verschieben des Schlittens entlang der Führungssäule nur dann erfolgen, wenn sich tatsächlich ein Ladungsträger im Adapter befindet. Hierdurch können unnötige Leerfahrten verhindert werden.

Nach einer fortentwickelten Ausführungsform umfasst der Adapter einen Lesekopf zum Identifizieren und Dokumentieren der aufgenommenen Ladungsträger. In dieser Ausführungsform kann nicht nur die Präsenz eines Ladungsträgers im Adapter erkannt werden, sondern es ist auch möglich, den im Adapter aufgenommenen Ladungsträger zu identifizieren. Die Information, dass zu einem bestimmten Zeitpunkt ein bestimmter Ladungsträger im Adapter aufgenommen war, lässt sich für Dokumentationszwecke und zum Nachverfolgen des Weges eines bestimmten Ladeguts verwenden.

Gemäß einer weitergeführten Ausführungsform wird der Auflageabschnitt von zumindest einer ersten Rolle, die an der ersten Seitenwand angeordnet ist, und zumindest einer zweiten Rolle gebildet, die an der zweiten Seitenwand angeordnet ist. Anstelle der ersten Rolle und der zweiten Rolle kann auch ein Band eingesetzt werden. Die Verwendung von Rollen oder Bändern hat den Vorteil, dass die Reibung und folglich der an den Ladungsträgern entstehende Verschleiß infolge des Transports gering gehalten wird. Die im Stand der Technik verwendeten Rollen erstrecken sich über die gesamte Breite des Ladungsträgers. Verwendet man derartige Rollen auch im Adapter, kann der Abstand der Seitenwände nicht oder nur mit sehr großem Aufwand verändert werden. Da in dieser Ausführungsform an jeder Seitenwand zumindest eine Rolle befestigt ist, lässt sich der Abstand der Seitenwände zueinander zumindest soweit ändern, bis dass die beiden Rollen entweder gegeneinander oder gegen die gegenüberliegende Seitenwand anschlagen. In dieser Ausführungsform lässt sich der Abstand zwischen den beiden Seitenwänden trotz der Verwendung von Rollen mit geringem technischen Aufwand verändern.

In einer weiteren Ausführungsform sind die erste Rolle und/oder die zweite Rolle angetrieben oder antreibbar. Für den Fall, dass Bänder verwendet werden, sind die Bänder angetrieben oder antreibbar. Aufgrund der Möglichkeit, eine oder beide Rollen anzutreiben, können die Ladungsträger in den Adapter hineingezogen werden, so dass sie eine vorbestimmbare Position im Adapter einnehmen. Hierdurch kann verhindert werden, dass die Ladungsträger nur teilweise im Adapter aufgenommen sind und beim Bewegen entlang der Führungssäule aus dem Adapter herausfallen können. Nach Beendigung des Transports können die Ladungsträger aus dem Adapter herausgeschoben werden, wodurch die Übergabe vereinfacht wird.

Nach einer weiterentwickelten Ausführungsform wird der Auflageabschnitt von einem Plattenboden gebildet. Der Plattenboden verleiht dem Adapter eine hohe Stabilität, so dass sich diese Ausführungsform für schwere Ladegüter anbietet. Zudem kann der Plattenboden mit Fugen versehen werden, entlang welcher die Seitenwände verschoben werden können. Die Verschiebbarkeit der Seitenwände lässt sich in dieser Ausführungsform mit geringem technischen Aufwand realisieren.

In einer weitergeführten Ausführungsform kann ein Erweiterungsabschnitt mit dem Plattenboden verbindbar sein. Mit dem Erweiterungsabschnitt kann der Adapter auf einfache Weise an unterschiedlich große Ladungsträger angepasst werden. Wie bereits erwähnt, muss ein Herausfallen der Ladungsträger aus dem Adapter verhindert werden, was mit dem Erweiterungsabschnitt insbesondere dann effektiv verhindert werden kann, wenn sehr lange Ladungsträger verwendet werden.

Gemäß einer fortgeführten Ausführungsform sind zumindest ein erster Anschlag an der ersten Seitenwand und zumindest ein zweiter Anschlag an der zweiten Seitenwand befestigbar. Mit den Anschlägen kann ein Ladungsträger innerhalb des Adapters gesichert und verhindert werden, dass der Ladungsträger aus dem Adapter herausfallen kann. Aufgrund der Anordnung der Anschläge an der ersten und der zweiten Seitenwand werden diese mitbewegt, wenn die Seitenwände relativ zueinander verschoben werden.

In einer weiteren Ausführungsform sind eine erste Verlängerungskufe an der ersten Seitenwand und eine zweite Verlängerungskufe an der zweiten Seitenwand befestigbar, wobei der erste Anschlag an der ersten Verlängerungskufe und der zweite Anschlag an der zweiten Verlängerungskufe befestigbar sind. Mit den Verlängerungskufen kann der Adapter für die Aufnahme von unterschiedlich hohen Ladungsträgern vorbereitet werden, ohne nennenswerten Aufwand betreiben zu müssen, so dass der Adapter sehr flexibel eingesetzt werden kann.

Nach einer fortentwickelten Ausführungsform weist der Adapter eine Schütteinrichtung zum Führen des Ladeguts beim Entleeren aus dem Ladungsträger auf. In einigen Fällen wird das Ladegut in Aufnahmebehälter überführt, welche schmaler sind als die Ladungsträger. Mit der Schütteinrichtung kann verhindert werden, dass zumindest ein Teil des Ladeguts beim Entleeren des Ladungsträgers verloren geht.

Gemäß einer weiterentwickelten Ausführungsform des Adapters weist die Schütteinrichtung eine einstellbare und feststellbare Schüttverjüngung auf. Aufgrund der Verstellbarkeit der Schütteinrichtung kann das Ladegut zielgerichtet in einen Aufnahmebehälter überführt werden. Wird die Schüttverjüngung sehr eng eingestellt, kann das Ladegut selbst durch kleine Öffnungen des Aufnahmebehälters geführt werden. Bei einer weit eingestellten Schüttverjüngung kann eine gleichmäßige Befüllung des Aufnahmebehälters realisiert werden. Die Schüttverjüngung kann mittels einer Antriebseinheit verstellt werden. Weiterhin kann eine unkontrollierte Verstellung der Schüttgutverjüngung dadurch verhindert werden, dass die Schüttverjüngung feststellbar ist. Die einmal gewählte Einstellung bleibt im Betrieb erhalten. Sie kann aber mit der Antriebseinheit im Betrieb dynamisch justiert und eingestellt werden.

Nach Maßgabe einer weitergeführten Ausführungsform weist der Adapter eine Auffangwanne zum Auffangen von Flüssigkeiten oder Feststoffen auf. Je nachdem, wie das Ladegut hergestellt wird, kann es beispielsweise mit einem Schmiermittel besprüht sein, was sich während des Transports langsam vom Ladegut löst. In diesem Fall sind die Ladungsträger häufig korbartig ausgestaltet, so dass sich das Schmiermittel im Adapter ansammelt oder in dem Fall, dass der Adapter an den Seitenwänden befestigte Rollen aufweist, das Schmiermittel unkontrolliert in die Werkhalle tropft. Wenn der Adapter anschließend für ein anderes Ladegut verwendet werden soll, muss er je nach Ausführungsform aufwändig gereinigt werden. Mit der Auffangwanne kann eine aufwendige Reinigung entfallen, da diese so ausgestaltet werden kann, dass sie sich gut reinigen lässt. Zudem kann verhindert werden, dass das Schmiermittel unkontrolliert in die Werkhalle tropft. An dieser Stelle soll hervorgehoben werden, dass die Auffangwanne auch für Adapter verwendet werden kann, bei denen keine der Seitenwände zur anderen der Seitenwände hin und von dieser weg bewegbar ist. Folglich können auch durchgehende Rollen zusammen mit der Auffangwanne verwendet werden.

Gemäß einer weiterentwickelten Ausführungsform umfasst die Vorrichtung einen Transportwagen zum Aufnehmen und Transportieren der Ladungsträger. Befüllte Ladungsträger können im Transportwagen abgelegt und mit dem Transportwagen beispielsweise in ein außerhalb der Werkhalle befindliches Lager transportiert werden. Insofern stellt der Transportwagen eine gewisse Speicherkapazität bereit, mit welcher einerseits leere Ladungsträger vorgehalten und andererseits befüllte Ladungsträger solange aufgenommen werden können, bis dass der Transportwagen vollständig beladen ist. Die Be- und Entladevorgänge können somit sehr flexibel und effizient durchgeführt werden. Die vorliegende Erfindung betrifft aber auch den Transportwagen als solchen losgelöst von der Vorrichtung.

Nach Maßgabe einer weiteren Ausführungsform umfasst der Transportwagen eine Trägereinrichtung mit zumindest einem ersten Seitenträger und einem zweiten Seitenträger, zumindest zwei erste Trägerrollen, die am ersten Seitenträger befestigt sind und zumindest zwei zweite Trägerrollen, die am zweiten Seitenträger befestigt sind, wobei zumindest einer der Seitenträger zum anderen der Seitenträger hin und von diesem weg bewegbar ist.

Wie bereits zum Adapter erwähnt, kann beim Bewegen des Transportwagens der im Transportwagen aufgenommene Ladungsträger verrutschen oder sogar aus dem Transportwagen herausfallen. Aus beiden Fällen können sich mehr oder weniger starke Nachteile für den Transport des im Ladungsträger angeordneten Ladeguts ergeben. Dadurch, dass zumindest einer der Seitenträger zum anderen der Seitenträger hin und von diesem weg bewegbar ist, kann der Abstand zwischen den Seitenträgern des Transportwagens so gewählt werden, dass er der Länge oder der Breite der verwendeten Ladungsträger entspricht. Ein Verrutschen der Ladungsträger wird hierdurch zumindest in Bezug auf die Seitenträger vermieden.

In einer weiteren Ausführungsform kann zumindest eine der Trägerrollen antreibbar sein. Aufgrund der Möglichkeit, eine oder beide Trägerrollen anzutreiben, können die Ladungsträger in den Transportwagen hineingezogen werden, so dass sie eine vorbestimmbare Position im Transportwagen einnehmen. Hierdurch kann verhindert werden, dass die Ladungsträger nur teilweise im Transportwagen aufgenommen sind und aus dem Transportwagen herausfallen können. Im Transportwagen werden üblicherweise mehrere Ladungsträger in einer Ebene abgelegt. Mithilfe der antreibbaren Trägerrollen kann ein Ladungsträger an eine bestimmte Position gefahren werden, ohne dass er mit einem anderen Ladungsträger kollidiert. Zudem können mehrere Ladungsträger spaltfrei aufgepulkt werden. Der Transportwagen kann folglich optimal beladen werden.

Nach einer weitergebildeten Ausführungsform weist der Transportwagen eine Verfahreinheit auf, mit welcher der Transportwagen verfahrbar ist. Der Transportwagen kann automatisch innerhalb einer Werkhalle oder zwischen einer Werkhalle und einem Lager bewegt werden, so dass der Transportwagen nicht von einem Mitarbeiter geschoben werden muss. Hierzu können Induktionsschleifen innerhalb der Werkhalle verlegt sein. Der Transportwagen kann verfahren werden, sobald er vollständig beladen ist. Wartezeiten werden verhindert. Zudem kann der Transportwagen in eine weitgehend automatisierte Produktion eingebunden werden. Die Verfahreinheit kann fest mit dem Transportwagen verbunden oder aber so ausgestaltet sein, dass der Transportwagen selbst keine Räder aufweist, sondern die Räder in der Verfahreinheit integriert sind. Der Abschnitt ohne die Räder, welche man auch als Speicherregal bezeichnen kann, kann beispielsweise mittels eines Gabelstaplers auf der Verfahreinheit abgestellt werden. Folglich kann die Verfahreinheit für mehrere Speicherregale und daher sehr kosteneffizient eingesetzt werden.

Eine weitere Ausführungsform gibt vor, dass der Transportwagen und insbesondere die Verfahreinheit eine Anzahl von Rädern aufweist, welche als Mecanum-Räder ausgebildet sind. Mecanum-Räder sind beispielsweise in der US 8 540 038 B1 offenbart. Auf dem Umfang des Mecanum-Rades sind mehrere drehbar gelagerte, meist tonnenförmige Rollen üblicherweise im Winkel von 45 Grad zur Achse des gesamten Mecanum-Rades angebracht. Ausschließlich diese Rollen stellen den Kontakt zum Boden her. Diese Rollen haben keinen direkten Antrieb und können sich frei um ihre schräge Lagerachse drehen. Mittels der Mecanum-Räder kann der Transportwagen, ob mit eigenem Antrieb oder von einem Mitarbeiter, omnidirektional bewegt werden, ohne dass eine Lenkvorrichtung benötigt wird. Der Transportwagen kann sehr einfach auf geringem Raum manövriert werden. An dieser Stelle soll hervorgehoben werden, dass die Mecanum-Räder auch für Transportwagen verwendet werden können, bei denen keine der Seitenwände zur anderen der Seitenwände hin und von dieser weg bewegbar ist. Folglich können beispielsweise auch durchgehende Rollen zusammen mit den Mecanum-Rädern verwendet werden. Gemäß einer weiteren Ausführungsform weist der Transportwagen eine Auffangwanne zum Auffangen von Flüssigkeiten oder Feststoffen auf. Je nachdem, wie das Ladegut hergestellt wird, kann es beispielsweise mit einem Schmiermittel besprüht sein, was sich während des Transports langsam vom Ladegut löst. In diesem Fall sind die Ladungsträger häufig korbartig ausgestaltet, so dass das Schmiermittel unkontrolliert in die Werkhalle tropft. Mit der Auffangwanne kann verhindert werden, dass das Schmiermittel unkontrolliert in die Werkhalle tropft. An dieser Stelle soll hervorgehoben werden, dass die Auffangwanne auch für Transportwagen verwendet werden kann, bei denen keine der Seitenwände zur anderen der Seitenwände hin und von dieser weg bewegbar ist. Folglich können beispielsweise auch durchgehende Rollen zusammen mit der Auffangwanne verwendet werden.

Nach einer weiterentwickelten Ausführungsform kann zumindest ein Verlängerungsabschnitt an den Transportwagen anschließbar sein. Die Transportwagen weisen üblicherweise mehrere, übereinander liegende Ebenen auf, in welche die Ladungsträger abgelegt werden können. Mit den Verlängerungsabschnitten kann die Kapazität des betreffenden Transportwagens auf einfache Weise vergrößert werden. Hierzu können die Verlängerungsabschnitte in entsprechende Aufnahmen des Transportwagens eingeschoben werden.

Nach einer fortgebildeten Ausführungsform weist der Transportwagen eine Kupplungseinrichtung zum Kuppeln des Transportwagens mit einem Kupplungspartner auf. Der Kupplungspartner kann ein am Fahrwerk, am Schlitten oder am Adapter angeordnetes Gegenstück sein. Der Kupplungspartner kann ein weiterer Transportwagen oder eine Hubvorrichtung zum Anheben der Adapter sein. Die Kupplungseinrichtung kann so ausgestaltet sein, dass elektrische Energie und elektrische Signale übertragen werden können, so dass auf das Anschließen von entsprechenden Steckern verzichtet werden kann. Weiterhin können Hydraulik- und/oder Pneumatikanschlüsse und/oder elektromagnetische Anschlüsse in der Kupplungseinrichtung integriert sein. Zudem kann die Kupplungseinrichtung den Transportwagen fixieren und gegen ein unbeabsichtigtes Wegrollen schützen. Des Weiteren dient die Kupplungseinrichtung zum Positionieren und Ausrichten des Transportwagens beispielsweise in Bezug auf die Hubvorrichtung. Folglich wird die reibungslose Übergabe der Adapter in den Transportwagen sichergestellt. Sämtliche Funktionen lassen sich mit einem Kupplungsvorgang innerhalb kurzer Zeit bereitstellen. An dieser Stelle soll hervorgehoben werden, dass die Kupplungseinrichtung auch für Transportwagen verwendet werden kann, bei denen keine der Seitenwände zur anderen der Seitenwände hin und von dieser weg bewegbar ist. Folglich können beispielsweise auch durchgehende Rollen zusammen mit der Kupplungseinrichtung verwendet werden.

Wenn der Transportwagen in mindestens zwei übereinander liegenden Etagen angeordnete Trägerrollen aufweist, kann die Kupplungseinrichtung pro Etage einen oder mehrere Anschlüsse aufweisen, auf welche das am Schlitten oder am Adapter angeordnete Gegenstück aufsteckbar ist. Die Kupplung wird erst dann realisiert, wenn sich der Schlitten oder der Adapter auf Höhe der entsprechenden Etage des Transportwagens befindet. Erst dann können beispielsweise die Trägerrollen mit elektrischer Energie versorgt und angetrieben werden, was aber zum Zuführen und zum Entnehmen der Ladungsträger zum bzw. vom Transportwagen genügt. In dieser Ausführungsform muss der Transportwagen nur etagenweise mit den entsprechenden Versorgungs- und/oder Signalleitungen versehen werden. Auf von einer zur anderen Etage verlaufende Versorgungs- und/oder Signalleitungen kann verzichtet werden, was den Aufbau des Transportwagens ohne nennenswerte Funktionsbeschränkungen deutlich vereinfacht.

Nach Maßgabe einer fortgebildeten Ausführungsform weist der Transportwagen eine Verriegelungseinrichtung zum Sichern der Ladungsträger im Transportwagen auf. Wie bereits erwähnt, weist der Transportwagen Seitenträger auf. Die Ladungsträger werden daher parallel zu den Seitenträgern in den Transportwagen eingebracht und wieder aus ihm entnommen. Insbesondere dann, wenn der Transportwagen Rollen aufweist, mit welchen die Ladungsträger im Transportwagen geführt werden, besteht die Gefahr, dass die Ladungsträger aus dem Transportwagen fallen, insbesondere dann, wenn der Transportwagen beschleunigt oder abgebremst wird. Die Verriegelungseinrichtung verhindert, dass die Ladungsträger aus dem Transportwagen herausfallen können.

Wie erwähnt, sind unter Ladungsträgern auch Trays zu verstehen. Das Be- und Entladen von Trays wird mit sogenannten Palettiervorrichtungen vorgenommen, die beispielsweise in der DE 10 2007 031 117 A1 offenbart sind. Derartige Palettiervorrichtungen weisen üblicherweise einen Zuführabschnitt auf, mit welchem die meistens leeren Trays der Palettiervorrichtung zugeführt werden können. Innerhalb der Palettiervorrichtung ist eine Bewegungseinrichtung angeordnet, mit welcher die Trays so bewegt werden, dass sie befüllt werden können. Die befüllten Trays werden mit der Bewegungseinrichtung in einen Abführabschnitt bewegt, mit dem die befüllten Trays aus der Palettiervorrichtung abgeführt und dem weiteren Transport zugeführt werden können.

In der DE 10 2007 031 117 A1 sind der Zuführabschnitt und der Abführabschnitt als Rollenbahnen ausgeführt. Folglich müssen die Trays auf den Rollenbahnen abgelegt und von diesen wieder entnommen werden, was üblicherweise manuell erledigt wird. Da die Trays aber insbesondere im beladenen Zustand sehr schwer sein können (bis zu 15 kg pro Tray), kann das manuelle Heben und Ablegen eine Gesundheitsgefährdung für den betreffenden Mitarbeiter darstellen.

Darüber hinaus sind die Rollenbahnen nur für Trays einer bestimmten Größe ausgelegt. Will man Trays einer anderen Größe verwenden, sind größere Umrüstungen in der Palettiervorrichtung notwendig, die zeitintensiv sind und nicht im laufenden Betrieb vorgenommen werden können. Weiterhin sind bekannte Palettiervorrichtungen nicht für Ladungsträger geeignet, die als Kisten ausgebildet sind. Zudem bieten bekannte Palettiervorrichtungen kaum Speicherkapazität, so dass die leeren Trays kontinuierlich zugeführt und die befüllten Trays kontinuierlich entnommen werden müssen. Infolgedessen wird viel Personal gebunden.

Aufgabe einer Ausführungsform der vorliegenden Erfindung ist es, eine Vorrichtung zum Zuführen von Ladungsträgern und/oder Trays zu einer Be- und/oder Entladestation und von dieser weg anzugeben, welche eine Abhilfe für die oben geschildete Situation bietet. Insbesondere soll die Vorrichtung sowohl für Ladungsträger als auch für Trays unterschiedlicher Größe einsetzbar sein, eine vergrößerte Speicherkapazität vorhalten und die Notwendigkeit des manuellen Hebens und Ablegens überflüssig machen oder zumindest deutlich reduzieren.

Eine Ausführungsform der Erfindung betrifft eine Vorrichtung zum Zuführen von Ladungsträgern und/oder Trays zu einer Be- und/oder Entladestation und von dieser weg, wobei in der Be- und/oder Entladestation ein Ladegut aus den Ladungsträgern oder den Trays entnommen und/oder in die Ladungsträger oder die Trays eingebracht werden kann, umfassend
- zumindest einen bewegbaren Transportwagen mit mindestens einem ersten Aufnahmeabschnitt zum Aufnehmen von Ladungsträgern und/oder Trays, die sich in einem ersten Zustand befinden, und mit mindestens einem zweiten Aufnahmeabschnitt zum Aufnehmen von Ladungsträgern und/oder Trays, die sich in einem zweiten Zustand befinden, und
- eine Bewegungseinrichtung, mit welcher die Ladungsträger und/oder Trays zwischen dem ersten Aufnahmeabschnitt und dem zweiten Aufnahmeabschnitt sowie zur Be- und/oder Entladestation und von dieser weg bewegt werden können, wenn sich der Transportwagen in einer Übergabeposition befindet.

Ein wesentlicher Aspekt der vorschlagsgemäßen Vorrichtung liegt in der Verwendung eines bewegbaren Transportwagens, der die beispielsweise aus der DE 10 2007 031 117 A1 bekannten Rollenbahnen ersetzt. Die feste Einheit aus Rollenbahn und Bewegungseinrichtung, wie sie in der DE 10 2007 031 117 A1 offenbart ist, wird vorschlagsgemäß aufgelöst, da der Transportwagen unabhängig von der Bewegungseinrichtung bewegt werden kann. Dabei ist der Transportwagen so auf die Bewegungseinrichtung abgestimmt, dass die Trays und/oder die Ladungsträger vom Transportwagen entnommen und auf diesen wieder abgelegt werden können, wenn sich der Transportwagen in einer Übergabeposition befindet. Der Transportwagen kann beispielsweise von einem Mitarbeiter in die Übergabeposition geschoben werden, in welcher die Trays und/oder die Ladungsträger vom Transportwagen an die Bewegungseinrichtung und zurück übergeben werden können. Eine manuelle Übergabe auf die Rollenbahnen entfällt.

Die Vorrichtung kann sowohl für Trays als auch für Ladungsträger verwendet werden, so dass im Gegensatz zu bekannten Palettiervorrichtungen die vorschlagsgemäße Vorrichtung deutlich flexibler eingesetzt werden kann. Zudem kann der Transportwagen so ausgestaltet sein, dass er die gewünschte Speicherkapazität bereitstellt. Der Transportwagen kann solange in der Übergabeposition verbleiben, bis sämtliche Trays oder Ladungsträger wie gewünscht be- und/oder entladen worden sind. Die Anwesenheit eines Mitarbeiters ist während dieser Zeit nicht notwendig.

Vorschlagsgemäß werden die Trays und/oder die Ladungsträger auf dem mindestens einen ersten Aufnahmeabschnitt des Transportwagens abgelegt, wobei sich die Trays und/oder die Ladungsträger in einem ersten Zustand befinden. Im ersten Zustand sind die Trays und/oder die Ladungsträger üblicherweise leer, sie können aber auch mit einem zu bearbeitenden Ladegut befüllt sein. Mittels der Bewegungseinrichtung werden die Trays und/oder die Ladungsträger vom Transportwagen entnommen und zu einer Be- und/oder Entladestation bewegt, mit welcher sie entweder mit dem Ladegut beladen werden oder das zu bearbeitende Ladegut aus den Trays und/oder den Ladungsträgern entnommen, einer Bearbeitung zugeführt und nach abgeschlossener Bearbeitung wieder in die Ladungsträger und/oder in die Trays abgelegt werden, wodurch die Trays und/oder die Ladungsträger in den zweiten Zustand überführt werden. Im zweiten Zustand werden die Trays und/oder die Ladungsträger auf die zweiten Aufnahmeabschnitte des Transportwagens abgelegt. Sobald sämtliche Trays und/oder Ladungsträger in den zweiten Zustand überführt und auf dem zweiten Aufnahmeabschnitt abgelegt worden sind, kann der Transportwagen wieder aus der Übergabeposition weg und beispielsweise zu einem Lager bewegt werden, wo das Ladegut gelagert und/oder verschickt wird.

Nach Maßgabe einer weiteren Ausführungsform sind die Trays oder die Ladungsträger stapelbar, wobei die Bewegungseinrichtung eine Greifeinrichtung zum Ergreifen der Trays oder der Ladungsträger aufweist. Die Stapelbarkeit ermöglicht das Anordnen einer Vielzahl von Trays oder Ladungsträgern auf einer geringen Fläche, so dass der Transportwagen weitreichend beladen und daher effektiv genutzt werden kann. In der Regel sind die Ladungsträger und die Trays nur von oben zugänglich, so dass nur ein nach oben nicht von einem anderen Ladungsträger verdeckter Ladungsträger be- und entladen werden kann. Entsprechendes gilt für die Trays. Mit der Greifeinrichtung werden die Ladungsträger oder die Trays von einem ersten Stapel nacheinander entnommen und auf einen zweiten Stapel abgelegt, so dass alle Ladungsträger und Trays be- und entladen werden können.

Zudem können die angetriebenen Trägerrollen des Transportwagens mit der Greifeinrichtung wie folgt zusammenwirken: Wie bereits erwähnt, können bei Stapeln von Ladungsträgern und Trays nur nach oben freie Ladungsträger oder Trays be- und entladen werden. Bei einem Stapel von beispielsweise fünf Trays kann die Greifeinrichtung die oberen vier Trays anheben. Das unterste Tray kann mit den angetriebenen Trägerrollen zur Be- und/oder Entladestation verfahren werden und dort wie beschrieben be- und/oder entladen werden. Sobald das Be- und/oder Entladen abgeschlossen ist, wird das unterste Tray wieder in die Ausgangsposition verfahren werden, wo die Greifeinrichtung die übrigen vier Trays wieder auf das unterste Tray abstellt. Die Greifeinrichtung muss die übrigen vier Trays nur etwas anheben und vom untersten Tray entfernen, so dass nur das unterste Tray von den antreibbaren Trägerrollen bewegt wird. Auch kann die Greifeinrichtung nur die oberen drei Trays anheben. In diesem Fall werden die beiden unteren Trays zur Be- und Entladestation gefahren, aber nur das zweite Tray von unten be- und entladen. Diese Vorgehensweise bietet sich insbesondere dann an, wenn die Trays mit unterschiedlichem Ladegut beladen werden sollen. Entsprechendes gilt für stapelbare Ladungsträger.

Eine weitergebildete Ausführungsform zeichnet sich dadurch aus, dass der Transportwagen eine Anzahl von Aufnahmebereichen aufweist, mit denen der Transportwagen ergriffen werden kann. An diesen Aufnahmebereichen kann der Transportwagen beispielsweise mit einem Gabelstapler ergriffen, angehoben und durch die Werkhalle gefahren werden. Die Gabelstapler können selbst autonom fahren, so dass auf diese Weise der Transportwagen automatisch verfahren werden kann, ohne dass hierfür eine Verfahreinheit oder eine Antriebseinheit benötigt werden. Mit dem Anheben kann auch eine 360°-Rundumsicht für am Transportwagen angeordnete Positionssensoren bereitgestellt werden, die für den reibungslosen Betrieb von fahrerlosen Transportsystemen (FTS) entscheidend ist.

Eine Ausbildung der Erfindung betrifft ein Verfahren zum Betreiben einer Vorrichtung nach einem der vorherigen Ausführungsformen zum Zuführen von Ladungsträgern und/oder Trays zu einer Be- und/oder Entladestation und von dieser weg, umfassend folgende Schritte:
- Bereitstellen eines bewegbaren Transportwagens, der mindestens einen ersten Aufnahmeabschnitt und mindestens einen zweiten Aufnahmeabschnitt aufweist,
- Aufnehmen von Ladungsträgern und/oder Trays, die sich in einem ersten Zustand befinden, auf zumindest einem der ersten Aufnahmeabschnitte,
- Bewegen des bewegbaren Transportwagens in eine Übergabeposition,
- Bewegen der Ladungsträger und/oder der Trays vom ersten Aufnahmeabschnitt zu einer Be- und/oder Entladestation mittels einer Bewegungseinrichtung,
- Be- und/oder Entladen der der Ladungsträger und/oder der Trays mittels der Be- und/oder Entladestation, wodurch die Ladungsträger und/oder die Trays in einen zweiten Zustand überführt werden,
- Bewegen der Ladungsträger und/oder der Trays von der Be- und/oder Entladestation zu zumindest einem der zweiten Aufnahmeabschnitte mit der Bewegungseinrichtung und Ablegen der Ladungsträger und/oder der Trays auf dem zumindest einen Aufnahmeabschnitt, und
- Bewegen des bewegbaren Transportwagens aus der Übergabeposition

Die technischen Effekte und Vorteile, die sich mit dem vorschlagsgemäßen Verfahren erreichen lassen, entsprechen denjenigen, die für die vorliegende Vorrichtung erörtert worden sind. Zusammenfassend sei darauf hingewiesen, dass die Vorrichtung sowohl für Trays als auch für Ladungsträger verwendet werden kann, so dass im Gegensatz zu bekannten Palettiervorrichtungen die vorschlagsgemäße Vorrichtung deutlich flexibler eingesetzt werden kann. Ein manuelles Umsetzen auf die Rollenbahnen entfällt. Zudem kann der Transportwagen so ausgestaltet sein, dass er die gewünschte Speicherkapazität bereitstellt. Der Transportwagen kann solange in der Übergabeposition verbleiben, bis sämtliche Trays oder Ladungsträger wie gewünscht be- oder entladen worden sind.

Beispielhafte Ausführungsformen der Erfindung werden im Folgenden unter Bezugnahme auf die beigefügten Zeichnungen näher erläutert. Es zeigen
- Figur 1A: eine prinzipielle Seitenansicht eines ersten Ausführungsbeispiels einer erfindungsgemäßen Vorrichtung zum Bewegen von Ladungsträgern,
- Figur 1B: eine prinzipielle Seitenansicht eines zweiten Ausführungsbeispiels einer erfindungsgemäßen Vorrichtung zum Bewegen von Ladungsträgern,
- Figur 1C: eine prinzipielle Seitenansicht eines dritten Ausführungsbeispiels einer erfindungsgemäßen Vorrichtung zum Bewegen von Ladungsträgern,
- Figuren 2A bis 2D: jeweils eine Schnittdarstellung durch die Führungssäule entlang der in Figur 1A definierten Schnittebene,
- Figur 3: eine prinzipielle Darstellung einer Sicherheitseinrichtung der erfindungsgemäßen Vorrichtung,
- Figur 4A: ein erstes Ausführungsbeispiel eines erfindungsgemäßen Adapters anhand einer prinzipiellen Vorderansicht,
- Figur 4B das in Figur 4A: gezeigte erste Ausführungsbeispiel des Adapters anhand einer prinzipiellen Seitenansicht,
- Figur 5: ein zweites Ausführungsbeispiel eines erfindungsgemäßen Adapters anhand einer prinzipiellen Seitenansicht,
- Figur 6: ein drittes Ausführungsbeispiel eines erfindungsgemäßen Adapters anhand einer prinzipiellen Vorderansicht,
- Figur 7: ein viertes Ausführungsbeispiel eines erfindungsgemäßen Adapters anhand einer prinzipiellen Seitenansicht,
- Figur 8: ein fünftes Ausführungsbeispiel eines erfindungsgemäßen Adapters anhand einer prinzipiellen Vorderansicht,
- Figur 9A: ein erstes Ausführungsbeispiel eines erfindungsgemäßen Transportwagens anhand einer prinzipiellen Seitenansicht,
- Figur 9B: das in Figur 9A gezeigte Ausführungsbeispiel des erfindungsgemäßen Transportwagens anhand einer prinzipiellen Vorderansicht,
- Figur 10: ein zweites Ausführungsbeispiel eines erfindungsgemäßen Transportwagens anhand einer prinzipiellen Seitenansicht, und
- Figur 11A: ein drittes Ausführungsbeispiel des erfindungsgemäßen Transportwagens anhand einer prinzipiellen Vorderansicht, wobei der Transportwagen eine sich in einer Offenstellung befindliche Verriegelungseinrichtung aufweist,
- Figur 11B das in Figur 11A: gezeigte Ausführungsbeispiel des erfindungsgemäßen Transportwagens ebenfalls anhand einer prinzipiellen Vorderansicht, wobei sich die Verriegelungseinrichtung in einer Schließstellung befindet,
- Figur 12: eine perspektivische Darstellung eines Mecanum-Rades, und
- Figuren 13A und 13B: eine prinzpielle Draufsicht auf ein Kupplungselement und eine Kupplungseinrichtung,.
- Figur 14: eine prinzipielle Seitenansicht eines vierten Ausführungsbeispiels einer erfindungsgemäßen Vorrichtung zum Bewegen von Ladungsträgern mit einem Transportwagen nach einem vierten Ausführungsbeispiel,
- Figur 15: ein sechstes Ausführungsbeispiel eines erfindungsgemäßen Adapters anhand einer prinzipiellen Vorderansicht, der mit der in Figur 14 dargestellten Vorrichtung verwendbar ist,
- Figur 16: eine prinzipielle Seitenansicht eines fünften Ausführungsbeispiels einer erfindungsgemäßen Vorrichtung zum Bewegen von Ladungsträgern, und
- Figur 17: eine prinzipielle Seitenansicht eines sechsten Ausführungsbeispiels einer erfindungsgemäßen Vorrichtung zum Bewegen von Ladungsträgern.

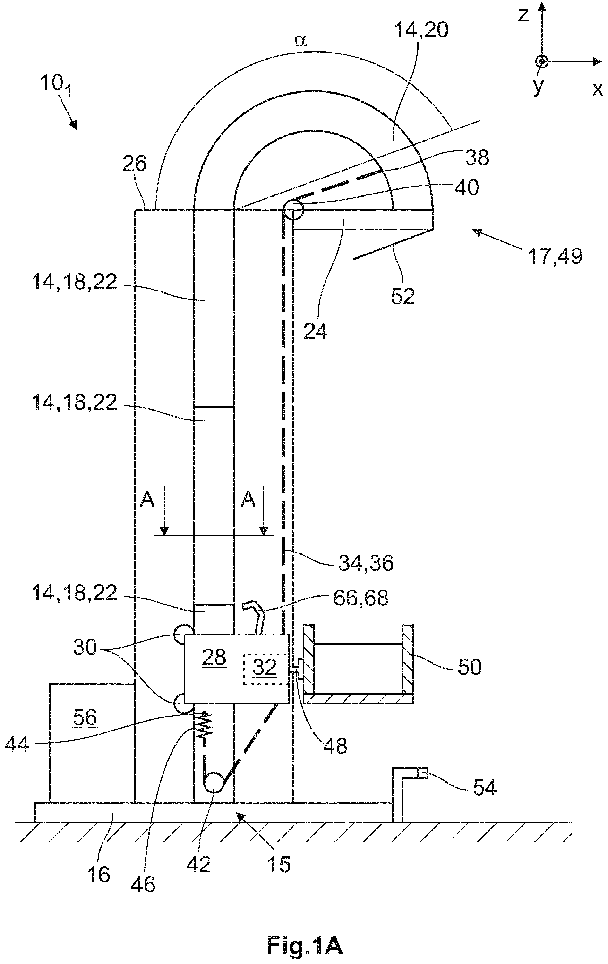

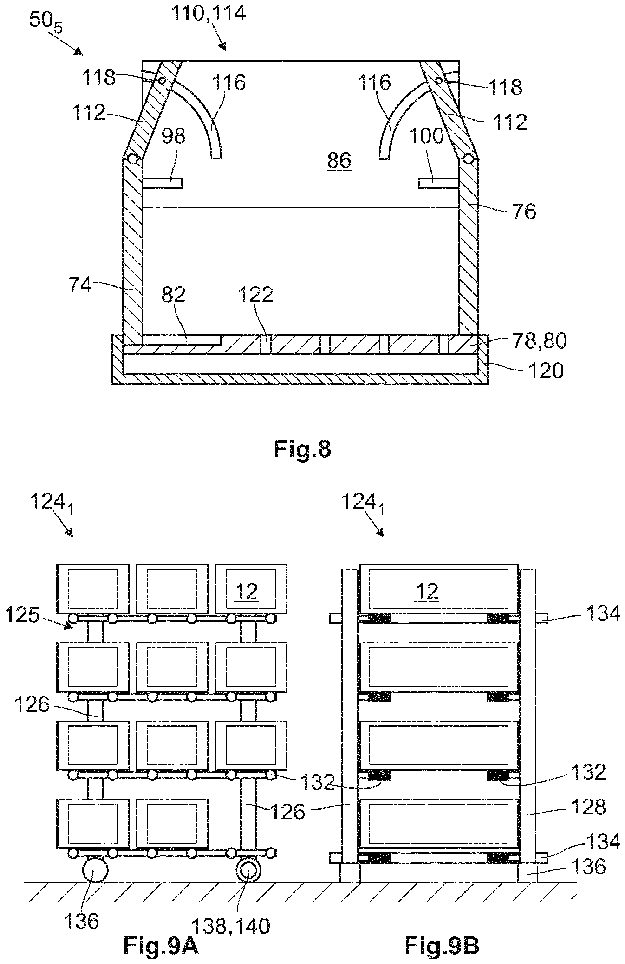

In der Figur 1A ist eine prinzipielle Seitenansicht eines Ausführungsbeispiels einer erfindungsgemäßen Vorrichtung 10₁ zum Bewegen von Ladungsträgern 12 (siehe beispielsweise Figur 9) gezeigt. Die Vorrichtung 10₁ umfasst eine Führungssäule 14 mit einem bodennahen Ende 15 und einem bodenfernen Ende 17, wobei die Führungssäule 14 am bodennahen Ende 15 in einer Bodenplatte 16 verankert ist. Die Führungssäule 14 weist einen geraden, im Wesentlichen senkrecht entlang der in Figur 1A definierten z-Achse verlaufenden ersten Abschnitt 18 und einen kreisringsektorförmigen oder bogenförmigen zweiten Abschnitt 20 auf. Das Vorsehen des zweiten Abschnitts 20 ist jedoch nicht zwingend erforderlich. Der erste Abschnitt 18 umfasst insgesamt drei Unterabschnitte 22, die identisch zueinander sind. Sowohl der Unterabschnitt 22 des ersten Abschnitts 18 als auch der kreisringsektorförmige zweite Abschnitt 20 sind mit nicht gezeigten Verbindungselementen versatzfrei miteinander verbunden. Die Anzahl der Unterabschnitte 22 kann frei gewählt werden, so dass die Höhe der Führungssäule 14 entsprechend angepasst werden kann. Zum Abstützen des kreisringsektorförmigen zweiten Abschnitts 20 ist ein Ausleger 24 vorgesehen, der zwischen einem Gehäuse 26 der Vorrichtung 10₁ und dem kreisringsektorförmigen zweiten Abschnitt 20 verläuft.

Die Vorrichtung 10₁ umfasst einen Schlitten 28, der entlang der Führungssäule 14 bewegt werden kann. Hierzu weist der Schlitten 28 eine Anzahl von Rädern 30 auf, die sich auf der Führungssäule 14 abrollen, worauf später noch genauer eingegangen wird. Am Schlitten 28 ist eine Antriebseinrichtung 32 angeordnet, mit welchem der Schlitten 28 entlang der Führungssäule 14 bewegt werden kann. Auch auf die Antriebseinrichtung 32 wird später noch genauer eingegangen. An dieser Stelle sei aber erwähnt, dass die Antriebseinrichtung 32 mit einem entlang der Führungssäule 14 verlaufenden Abstützmittel 34 zusammenwirkt, welche in diesem Fall als eine Kette 36 oder als ein Riemen ausgeführt ist. Das Abstützmittel 34 ist an einem ersten Ende 38 fest mit der Vorrichtung 10₁ verbunden, im dargestellten Beispiel im kreisringsektorförmigen zweiten Abschnitt 20 der Führungssäule 14. Das Abstützmittel 34 wird von einer ersten Umlenkrolle 40, die an der Führungssäule 14 befestigt ist, und einer zweiten Umlenkrolle 42, welche am Gehäuse 26 befestigt ist, umgelenkt. An einem zweiten Ende 44 ist das Abstützmittel 34 mittels eines elastischen Elements 46 an der Führungssäule 14 befestigt.

Am Schlitten 28 kann mittels eines Anschlussflansches 48 ein Adapter 50₁ befestigt werden, welcher einen hier nicht dargestellten Ladungsträger 12 aufnehmen und zusammen mit dem Schlitten 28 entlang der Führungssäule 14 bewegt werden kann. Das Gehäuse 26 weist eine schlitzförmige Ausnehmung (nicht dargestellt) auf, innerhalb welcher sich der Anschlussflansch 48 bewegen kann. Aus Darstellungsgründen ist der Anschlussflansch 48 um die z-Achse um 90° versetzt am Schlitten 28 montiert dargestellt, allerdings ist vorgesehen, dass der Anschlussflansch 48 bezogen auf die Figur 1A hinter oder vor der Führungssäule 14 angeordnet ist, so dass auch der Adapter 50₁ vor oder hinter der Führungssäule 14 entlang dieser bewegt wird. Im Bereich eines freien Endes 49 der Führungssäule 14, welches mit dem bodenfernen Ende 17 zusammenfällt, hier im kreissektorförmigen zweiten Abschnitt 20, ist ein Leitblech 52 angeordnet, mit welchem ein hier nicht gezeigtes Ladegut beim Entleeren aus dem Ladungsträger 12 geführt werden kann.

Die Vorrichtung 10₁ weist zudem ein Kupplungselement 54 auf, auf dessen Funktion später genauer eingegangen wird. Darüber hinaus ist die Vorrichtung 10₁ mit einem Gehäusekasten 56 versehen, in welchem beispielsweise nicht gezeigte elektrische und elektronische Komponenten zum Steuern der Vorrichtung 10₁ untergebracht sind.

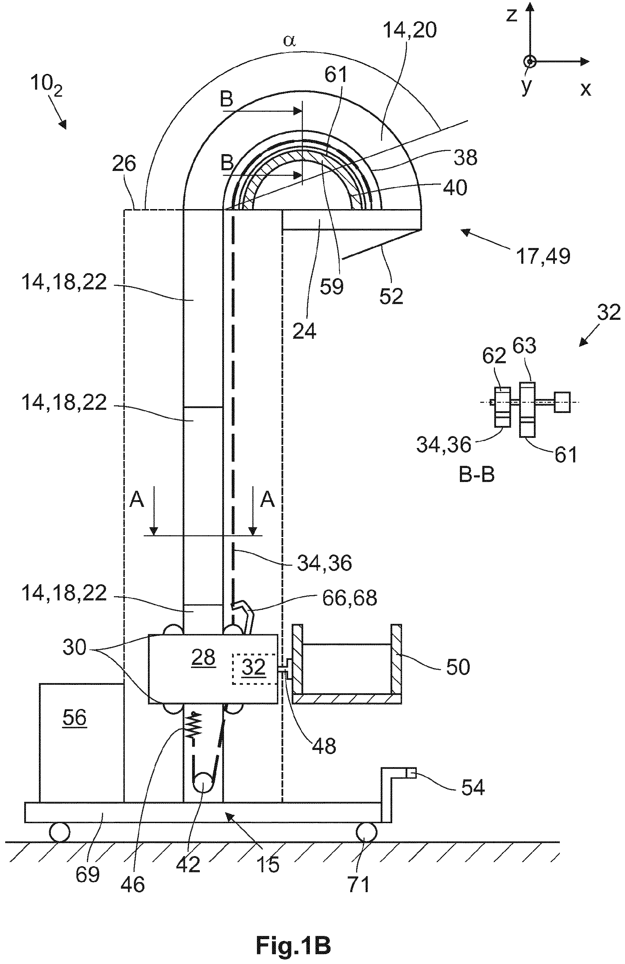

Das in Figur 1B gezeigte zweite Ausführungsbeispiel der erfindungsgemäßen Vorrichtung 10₂ ist im Wesentlichen so aufgebaut wie die Vorrichtung 10₁ nach dem ersten Ausführungsbeispiel. Allerdings ist am zweiten Abschnitt 20 ein Umlenkabschnitt 59 befestigt, welcher mit dem Abstützmittel 34 zusammenwirkt und dieses so führt, dass es dem kreissektorförmigen Verlauf des zweiten Abschnitts 20 folgt. Weiterhin ist im zweiten Abschnitt 20 eine Zahnstange 61 vorgesehen, welche ebenfalls dem kreissektorförmigen Verlauf des zweiten Abschnitts 20 folgt und in etwa bogenförmig ausgebildet ist. Die Zahnstange 61 ist in y-Richtung versetzt zum Abstützmittel 34 angeordnet.

Aus der Schnittdarstellung entlang der Schnittebene B-B wird deutlich, dass die Antriebseinrichtung 32 neben dem Ritzel 62 noch ein weiteres Ritzel 63 aufweist, welches in die Zahnstange 61 eingreift, wenn sich der Schlitten 28 im zweiten Abschnitt 20 befindet. Das Ritzel 62 und das weitere Ritzel 63 sowie die Zahnstange 61 sind so aufeinander abgestimmt, dass keine Spannungen in den Schlitten 28 eingetragen werden.

Bezogen auf die in den Figuren 1A und 1B gewählten Darstellungen verläuft das Abstützmittel 34 größtenteils auf der rechten Seite des ersten Abschnitts 18 der Führungssäule 14. Zudem zeigt der zweite Abschnitt 20 ausgehend vom ersten Abschnitt 18 ebenfalls nach rechts. Folglich ist der Umlenkabschnitt 59 auf der radialen Innenseite des zweiten Abschnitts 20 angeordnet, wobei es sich anbietet, auch die Zahnstange 61 auf der radialen Innenseite des zweiten Abschnitts 20 anzuordnen, wie es in Figur 1B dargestellt ist. Allerdings kann das Abstützmittel 34 auch größtenteils auf der linken Seite der Führungssäule 14 verlaufen, so dass dann der Umlenkabschnitt 59 so ausgebildet ist, dass dieser das Abstützmittel 34 auf der radialen Außenseite des zweiten Abschnitts 20 führt. Entsprechend kann auch die Zahnstange 61 an der radialen Außenseite des zweiten Abschnitts 20 verlaufen.

Wie aus der Schnittdarstellung B-B ersichtlich, sind das Ritzel 62 und das weitere Ritzel 63 auf einer gemeinsamen Welle angeordnet. Es ist aber ebenfalls möglich, für jedes der Ritzel 62, 63 eine eigene Welle vorzusehen. In diesem Fall können beispielsweise die Zahnstange 61 auf der radialen Außenseite und das Abstützmittel 34 auf der radialen Innenseite des zweiten Abschnitts 20 verlaufen oder umgekehrt.

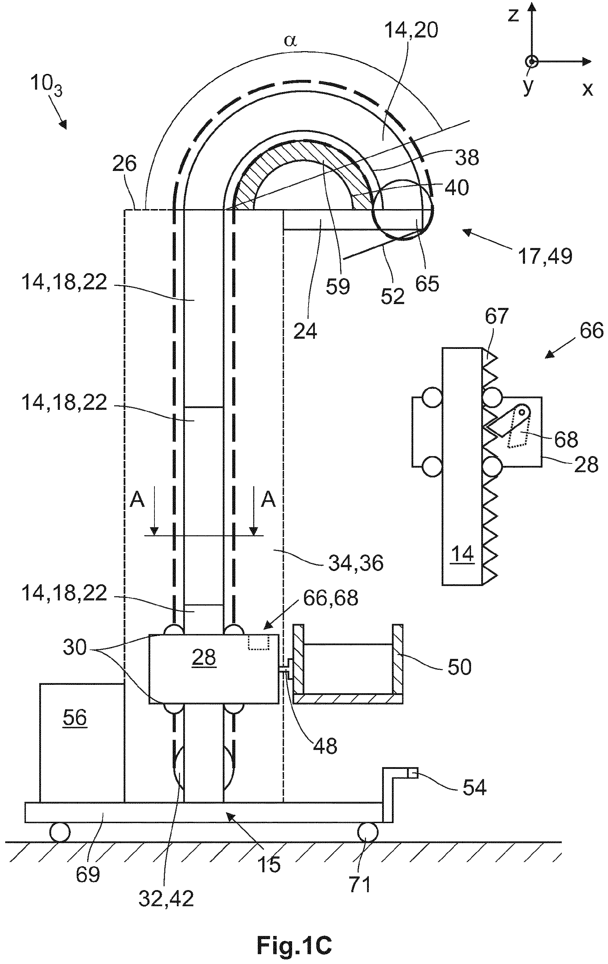

In Figur 1C ist ein drittes Ausführungsbeispiel der erfindungsgemäßen Vorrichtung 10₃ dargestellt, welche ebenfalls zum größten Teil der Vorrichtung 10₃ nach dem ersten Ausführungsbeispiel entspricht. Im dritten Ausführungsbeispiel ist das Abstützmittel 34 endlos ausgestaltet, wobei eine zweite Umlenkrolle 65 am freien Ende 49 der Führungssäule 14 angeordnet ist. Auch im dritten Ausführungsbeispiel umfasst die Vorrichtung 10₃ den Umlenkabschnitt 59, welcher das Abstützmittel 34 entsprechend dem Verlauf des zweiten Abschnitts 20 umlenkt. Im dritten Ausführungsbeispiel der Vorrichtung 10₃ wird das Abstützmittel 34 bewegt, wozu die Antriebseinrichtung 32 mit der ersten Umlenkrolle 42 zusammenwirkt und diese antreibt. Der Schlitten 28 ist in geeigneter Weise fest mit dem Abstützmittel 34 befestigt. Eine Zahnstange 61 ist nicht vorgesehen.

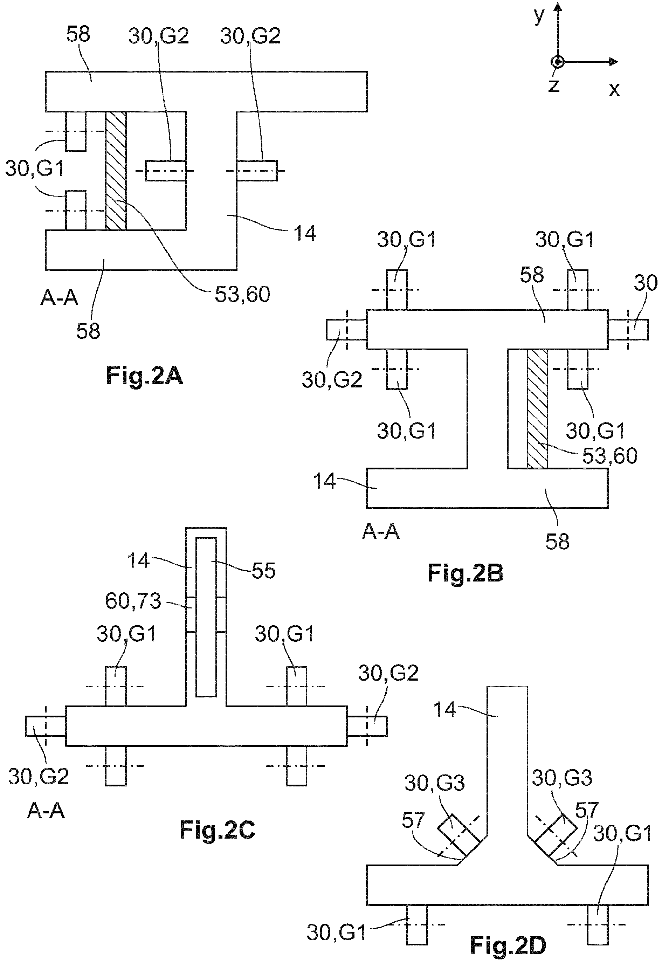

In den Figuren 2A bis 2D sind verschiedene Schnittdarstellungen entlang der in Figur 1A definierten Schnittebene A-A durch die Führungssäule 14 gezeigt. Aus den Figuren 2A bis 2C ist erkennbar, dass die Führungssäule 14 einen halb-H-förmigen (Figur 2A), einen H-förmigen (Figur 2B) oder einen T-förmigen (Figur 2C) Querschnitt aufweisen kann. Zudem sind aus den Figuren 2A bis 2C die Räder 30 zu erkennen, mit denen der Schlitten 28 auf der Führungssäule 14 abrollt. Die Räder 30 lassen sich in zwei Gruppen aufteilen, nämlich in eine erste Gruppe G1, dessen Räder 30 eine Drehachse aufweisen, die parallel zur x-Achse verlaufen, und in eine zweite Gruppe G2, dessen Räder 30 eine Drehachse aufweisen, die parallel zur y-Achse verlaufen. Die Räder 30 können beabstandet zueinander bezogen auf die z-Achse angeordnet ein. Die Anordnung der Räder 30 dient dazu, die beim Bewegen des Adapters 50₁ auftretenden Drehmomente sicher auf die Führungssäule 14 zu übertragen. Mindestens zwei Räder 30 pro Gruppe sind vorgesehen, die sich an jeweils gegenüberliegenden Seiten der Führungssäule 14 abrollen. In Figur 2D ist eine Führungssäule 14 dargestellt, welche im Wesentlichen einen T-förmigen Querschnitt aufweist, der zwei Abrollflächen 57 aufweist, welche in einem 45°-Winkel zur x-Achse und zur y-Achse verlaufen. Auf diesen Abrollflächen 57 rollen die zwei Räder 30 ab, die zu einer dritten Gruppe G3 gehören, deren Drehachsen in einem Winkel von 45° zur x-Achse und zur y-Achse verlaufen.

Sowohl die in Figur 2A und 2B dargestellten Führungssäulen 14 mit halb-H-förmigem und H-förmigem Querschnitt weisen zwei parallel zueinander verlaufende Schenkel 58 auf, zwischen denen zumindest ein Sicherungsabschnitt 60 verläuft. In den Figuren 2A und 2B ist der Sicherungsabschnitt 60 als ein Sicherungsbolzen 53 ausgeführt. Der in den Figuren 2A und 2B nicht dargestellte Schlitten 28 ist so konstruiert, dass er nicht am Sicherungsbolzen 53 anschlägt.

Die in Figur 2C dargestellte Führungssäule 14 mit dem T-förmigen Querschnitt unterscheidet sich von den übrigen Querschnitten, die in den Figuren 2A, 2B und 2D dargestellt sind, auch dadurch, dass die Führungssäule einen Hohlraum 55 aufweist. Auch die in den Figuren 2A, 2B und 2D dargestellten Querschnitte können einen Hohlraum 55 oder mehrere Hohlräume 55 aufweisen. Für den Fall, dass die Führungssäule 14 einen oder mehrere Hohlräume 55 aufweist, können die Sicherungsabschnitte 60 auch als in den Hohlraum 55 mündende Durchgangsöffnungen 73 ausgebildet sein.

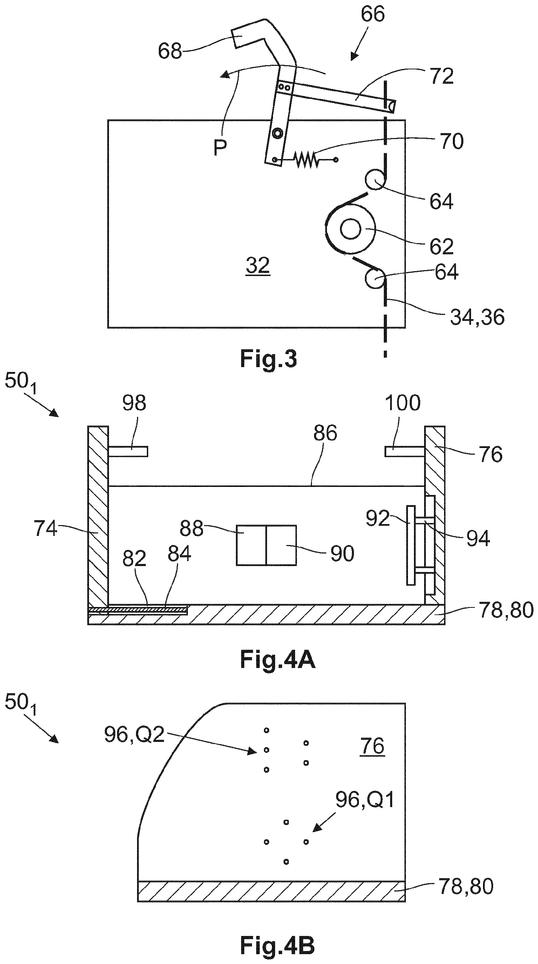

In Figur 3 ist die Antriebseinrichtung 32 genauer dargestellt, mit welcher der Schlitten 28 entlang der Führungssäule 14 bewegt werden kann. Die Antriebseinrichtung 32 weist ein Ritzel 62 auf, welches mit der Antriebseinrichtung 32 gedreht werden kann. Wie erläutert, ist das Abstützmittel 34 als eine Kette 36 oder ein Riemen ausgebildet, in welches oder in welchen das Ritzel 62 formschlüssig eingreift. Um einen möglichst großflächigen Eingriff zu erreichen, wird die Kette 36 oder der Riemen mittels zwei Abstützmittel-Umlenkrollen 64 umgelenkt. Je nach Drehrichtung des Ritzels 62 wird der Schlitten 28 entlang der Führungssäule 14 angehoben oder abgesenkt.

Zudem ist aus den Figuren 1A, 1B, 1C und 3 erkennbar, dass die erfindungsgemäße Vorrichtung 10₁, 10₂, 10₃ eine mit dem Schlitten 28 zusammenwirkende Sicherheitseinrichtung 66 aufweist. Die Sicherheitseinrichtung 66 weist ein Sicherungselement 68 auf, welches im in Figur 3 dargestellten Ausführungsbeispiel hakenförmig ausgestaltet ist. Das Sicherungselement 68 ist um die y-Achse drehbar gelagert (vgl. Figuren 1A und 1B) und wird mit einem Vorspannmittel 70, im dargestellten Beispiel mit einer Feder, vorgespannt. Damit die Feder vorgespannt werden kann, ist das Sicherungselement 68 mit einem Gegenhalter 72 verbunden, der sich an der Kette 36 oder am Riemen abstützt, so dass das Sicherungselement 68 in der in Figur 3 gezeigten ersten Position gehalten wird. Der Gegenhalter 72 kann die Feder 70 nur deshalb vorspannen, da die Kette 36 oder der Riemen ausreichend stark gestrafft ist und sich somit kaum in die Wirkrichtung und in die entgegengesetzte Richtung der von der Feder 70 bereitgestellten Vorspannkraft auslenken lässt. Solange sich das Sicherungselement 68 in der ersten Position befindet, kann der Schlitten 28 entlang der Führungssäule 14 bewegt werden. Für den Fall, dass die Kette 36 oder der Riemen reißt, bewegt sich der Schlitten 28 unkontrolliert entlang der Führungssäule 14 nach unten. In diesem Fall lässt sich aber die Kette 36 oder der Riemen in die Wirkrichtung und der entgegengesetzten Richtung der von der Feder 70 bereitgestellten Vorspannkraft auslenken, so dass die Feder nicht mehr vorgespannt werden kann. Folglich wird das Sicherungselement 68 um die mit dem Pfeil P gekennzeichnete Richtung um die y-Achse in eine nicht dargestellte zweite Position gedreht. In dieser zweiten Position kann das Sicherungselement 68 in den in Figur 2B gezeigten Sicherungsbolzen 61 eingreifen, so dass der Schlitten 28 an der Führungssäule 14 festgestellt wird und nicht mehr weiter unkontrolliert entlang der Führungssäule 14 nach unten fallen kann. Anstelle der Feder 70 kann auch ein nicht dargestelltes Gegengewicht verwendet werden, welches für den Fall, dass die Kette 36 oder der Riemen reißt, das Sicherungselement 68 in die zweite Position dreht. Je nach Ausgestaltung der Führungssäule 14 kann das Sicherungselement 68 auch in die Durchgangsöffnung 73 eingreifen.

In Figur 1C ist ein weiteres Ausführungsbeispiel der Sicherheitseinrichtung 66 dargestellt. In diesem Ausführungsbeispiel ist an der Führungssäule 14 eine Sperrverzahnung 67 angeordnet. Das Sicherungselement 68 kann auf die oben erwähnte Weise in die mit unterbrochenen Linien dargestellte erste Position vorgespannt werden, in welcher das Sicherungselement 68 nicht in die Sperrverzahnung 67 eingreift. Solange sich das Sicherungselement 68 in der ersten Position befindet, kann der Schlitten 28 in beide Richtungen entlang der Führungssäule 14 bewegt werden. Reißt das Abstützmittel 34, wird das Sicherungselement 68 in die zweite Position gestellt, welche mit den durchgezogenen Linien dargestellt ist. In der zweiten Position greift das Sicherungselement 68 in die Sperrverzahnung 67 ein und stellt den Schlitten 28 so fest, dass er nicht mehr nach unten bewegt werden kann. Ähnlich wie bei einer Ratsche ist das Anheben des Schlittens 28 noch möglich. Das Vorsehen der Sperrverzahnung 67 ist nicht zwingend notwendig, vielmehr können die Führungssäule 14 und das Sicherungselement 68 in der zweiten Position derart miteinander zusammen wirken, dass ein Reibschluss entsteht, der den Schlitten 28 abbremst, wenn das Abstützmittel 34 reißt.

Im zweiten und dritten Ausführungsbeispiel (Figuren 1B und 1C) weist die Vorrichtung 10₂, 10₃ ein Fahrwerk 69 auf, mit welchem die Vorrichtung 10₂, 10₃ verfahrbar ist. Im Fahrwerk 69 umfasst eine Anzahl von Rädern 71, von denen zumindest eines mit einer nicht näher gezeigten Antriebseinheit angetrieben wird. Die Vorrichtung 10₂, 10₃ nach dem zweiten und dritten Ausführungsbeispiel kann in ein fahrerloses Transportsystem integriert werden.

Bezugnehmend auf die Figuren 1A bis 1C lässt sich der Schlitten 28 zusammen mit dem Adapter 50 entlang der Führungssäule 14 bewegen. Aufgrund der Art und Weise der Ausführungsform des Abstützmittels 34 kann der Schlitten 28 den kreissektorförmigen zweiten Abschnitt 20 der Führungssäule 14 nahezu komplett durchlaufen, wobei der Schlitten 28 und folglich der Adapter 50₁ auf der vom zweiten Abschnitt 20 der Führungssäule 14 vorgegebenen Bahn um die y-Achse gedreht werden. Der Drehwinkel α ist in Figur 1A gekennzeichnet und beträgt dort 150°. Bei einer entsprechenden Gestaltung des kreissektorförmigen zweiten Abschnitts 20 kann er aber auch bis zu 180° betragen. Das im Ladungsträger 12 enthaltene Ladegut wird auf diese Weise schonend ausgeschüttet und vom Leitblech 52 so geleitet, dass es in einen nicht dargestellten Aufnahmebehälter überführt werden kann.

In Figur 4A ist ein erstes Ausführungsbeispiel eines erfindungsgemäßen Adapters 50₁ anhand einer prinzipiellen Vorderansicht und in Figur 4B anhand einer prinzipiellen Seitenansicht gezeigt. Der Adapter 50₁ weist eine erste Seitenwand 74 und eine zweite Seitenwand 76 auf, die im Wesentlichen parallel zueinander verlaufen. Weiterhin umfasst der Adapter 50₁ einen Auflageabschnitt 78, auf welchem zumindest ein Ladungsträger 12 auflegbar ist. Der Auflageabschnitt 78 ist im ersten Ausführungsbeispiel des Adapters 50₁ als ein Plattenboden 80 ausgeführt, in welchem eine Fuge 82 eingelassen ist, entlang welcher die erste Seitenwand 74 verschoben werden kann. Zudem weist der Adapter 50₁ eine Verstelleinrichtung 84 auf, die beispielsweise eine Spindel umfasst, mit welcher die erste Seitenwand 74 zur zweiten Seitenwand 76 hin und von dieser wieder weg geschoben werden kann. Auf diese Weise kann der Abstand zwischen den beiden Seitenwänden 74, 76 an die Breite oder die Länge des Ladungsträgers 12 angepasst werden.

Wie aus Figur 4B erkennbar, schließt der Plattenboden 80 nach vorne und nach hinten mit den Seitenwänden 74, 76 bündig ab. Zudem umfasst der Adapter 50₁ zwischen den Seitenwänden 74, 76 verlaufende eine Rückwand 86, an welcher ein Sensor 88 zum Erkennen der Präsenz eines Ladungsträgers 12 im Adapter 50₁ und/oder in der unmittelbaren Umgebung des Adapters 50₁ sowie ein Lesekopf 90 zum Identifizieren und Dokumentieren der aufgenommenen Ladungsträger 12 befestigt sind. Die Rückwand 86 weist eine etwas geringere Höhe als die Seitenwände 74, 76 auf.

Die zweite Seitenwand 76 weist einen Wandabschnitt 92 auf, der mit einer Vorspanneinrichtung 94 vorgespannt werden kann. Der Abstand zwischen der ersten Seitenwand 74 und dem Wandabschnitt 92 wird so gewählt, dass dieser etwas geringer ist als die Länge oder die Breite des Ladungsträgers 12. Wenn der Ladungsträger 12 in den Adapter 50₁ eingebracht wird, tritt dieser in Kontakt mit dem Wandabschnitt 92, so dass der Wandabschnitt 92 zur zweiten Seitenwand 76 hin bewegt wird und die Vorspanneinrichtung 94 vorgespannt, so dass der Ladungsträger 12 zur ersten Seitenwand 74 geschoben wird. Die von der Vorspanneinrichtung 94 bereitgestellte Vorspannkraft erzeugt eine Reibkraft zwischen dem Ladungsträger 12 und der ersten Seitenwand 74 und dem Wandabschnitt 92, so dass der Ladungsträger 12 einerseits eindeutig in seiner Lage bezüglich der Seitenwände 74, 76 im Adapter 50₁ positioniert und andererseits aufgrund der Reibkraft im Ladungsträger 12 gehalten und gegen Herausrutschen gesichert wird.

Wie erläutert, kann der Adapter 50₁ mit dem Schlitten 28 verbunden werden, wozu der Schlitten 28 den bereits erwähnten Anschlussflansch 48 aufweist. In Figur 4B ist erkennbar, dass die Seitenwände 74, 76 eine erste Gruppe Q1 von rautenförmig angeordneten Durchgangslöchern 96 aufweisen. Die Durchgangslöcher 96 der ersten Gruppe Q1 dienen zum Befestigen des Adapters 50₁ am Anschlussflansch 48 (vgl. Figur 1).

Weiterhin ist aus der Figur 4A zu erkennen, dass an der ersten Seitenwand 74 ein erster Anschlag 98 und an der zweiten Seitenwand 76 ein zweiter Anschlag 100 befestigt ist. Mit diesen Anschlägen 98, 100 wird der Ladungsträger 12 zwischen dem Plattenboden 80 und den Anschlägen 98, 100 fixiert, so dass der Ladungsträger 12 insbesondere dann nicht aus dem Adapter 50₁ herausfallen kann, wenn der Adapter 50₁ entlang des kreissektorförmigen zweiten Abschnitts 20 der Führungssäule 14 bewegt wird.

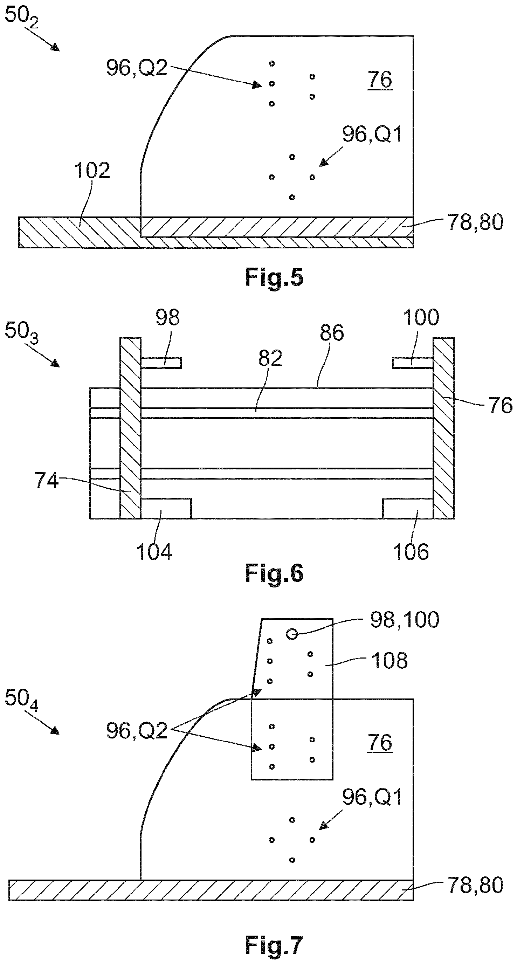

In Figur 5 ist ein zweites Ausführungsbeispiel des erfindungsgemäßen Adapters 50₂ anhand einer Seitenansicht gezeigt. Der Adapter 50₂ nach dem zweiten Ausführungsbeispiel gleicht weitgehend dem des ersten Ausführungsbeispiels, allerdings kann ein Erweiterungsabschnitt 10₂ mit dem Plattenboden 80 verbunden werden, wodurch auch längere Ladungsträger 12 sicher im Adapter 50₂ aufgenommen werden können.

In Figur 6 ist ein drittes Ausführungsbeispiel des erfindungsgemäßen Adapters 50₃ anhand einer prinzipiellen Vorderansicht gezeigt. Im Gegensatz zum ersten und zum zweiten Ausführungsbeispiel wird der Auflageabschnitt 78 nicht von einem Plattenboden 80, sondern von einer ersten Rolle 104, die an der ersten Seitenwand 74 angeordnet ist, und einer zweiten Rolle 106 gebildet, die an der zweiten Seitenwand 76 angeordnet ist. Die Rollen 104, 106 können mittels einer nicht dargestellten Antriebseinheit angetrieben werden, so dass ein Ladungsträger 12 in den Adapter 50₃ hineingezogen und wieder aus ihm herausgeschoben werden kann. Im dritten Ausführungsbeispiel ist die Rückwand 86 mit den Fugen 82 versehen, entlang welcher die Seitenwände 74, 76 aufeinander zu und voneinander weg verschoben werden können.

In Figur 7 ist ein viertes Ausführungsbeispiel des erfindungsgemäßen Adapters 50₄ anhand einer prinzipiellen Seitenansicht dargestellt. Der Adapter 50₄ nach dem vierten Ausführungsbeispiel gleicht weitgehend dem des ersten Ausführungsbeispiels (siehe Figuren 4A und 4B), wobei der Plattenboden 80 ohne Erweiterungsabschnitt 10₂ nach vorne über die Seitenwände 74, 76 vorsteht. Zudem ist an der ersten Seitenwand 74 und an der zweiten Seitenwand 76 je eine Verlängerungskufe 108 unter Verwendung einer zweiten Gruppe Q2 von Durchgangslöchern 96 verbunden. In diesem Ausführungsbeispiel sind der erste Anschlag 98 und der zweite Anschlag 100 nicht an den Seitenwänden 74, 76, sondern an den Verlängerungskufen 108 befestigt. Wie aus Figur 7 ersichtlich, weisen die Verlängerungskufen 108 zwei zweite Gruppen Q2 der Durchgangslöcher 96 auf, so dass noch weitere Verlängerungskufen 108 an die gezeigten Verlängerungskufen 108 befestigt werden können. Mit den Verlängerungskufen 108 kann der Abstand zwischen dem Auflageabschnitt 78 und den Anschlägen 98, 100 vergrößert werden, so dass auch höhere Ladungsträger 12 im Adapter 50₄ aufgenommen werden können.

Das in Figur 8 dargestellte fünfte Ausführungsbeispiel des Adapters 50₅ weist eine Schütteinrichtung 110 zum Führen des Ladeguts beim Entleeren des Ladungsträgers 12 auf. Im fünften Ausführungsbeispiel weist die Rückwand 86 eine größere Höhe als die Seitenwände 74, 76 auf und steht daher nach oben über die Seitenwände 74, 76 über. Der überstehende Teil der Rückwand 86 ist Teil der Schütteinrichtung 110. Weiterhin umfasst die Schütteinrichtung 110 zwei beweglich an den Seitenwänden 74, 76 befestigte Führungsabschnitte 112, mit denen eine Schüttverjüngung 114 eingestellt werden kann. Auf dem überstehenden Teil der Rückwand 86 sind bogenförmige Langlöcher 116 vorgesehen, die von Befestigungsmitteln 118 durchdrungen werden. Die einmal eingestellte Position der Führungsabschnitte 112 relativ zu der Rückwand 86 kann mit den Befestigungsmitteln 118 fixiert werden.

Weiterhin weist der Adapter 50₅ nach dem fünften Ausführungsbeispiel eine Auffangwanne 120 auf, mit welcher insbesondere Flüssigkeiten aufgefangen werden können. Derartige Flüssigkeiten können Schmier- oder Kühlstoffe sein, welche bei der Herstellung des Ladeguts verwendet werden und sich erst langsam vom Ladegut lösen. Der Plattenboden 80 ist mit Abflusslöchern 122 versehen, so dass die vom Ladegut abgegebene Flüssigkeit in die Auffangwanne 120 fließen kann. Die Auffangwanne 120 ist schnell lösbar mit dem Adapter 50₅ verbunden, so dass sie auf einfache Weise vom Adapter 50₅ getrennt, entleert und wieder mit dem Adapter 50₅ verbunden werden kann.

In den Figuren 9A ist ein erstes Ausführungsbeispiel eines erfindungsgemäßen Transportwagens 124₁ anhand einer prinzipiellen Seitenansicht und in Figur 9B anhand einer prinzipiellen Vorderansicht dargestellt. Der Transportwagen 124₁ weist im ersten Ausführungsbeispiel eine Trägereinrichtung 125 mit zwei ersten Seitenträgern 126 und zwei zweiten Seitenträgern 128 auf. Jeweils verteilt auf vier Etagen sind am ersten Seitenträger 126 pro Etage sechs erste Trägerrollen 132 und am zweiten Seitenträger 128 pro Etage sechs zweite Trägerrollen 132 befestigt, wobei die Anzahl der Etagen und die Anzahl der ersten und zweiten Trägerrollen 132 weitgehend frei gewählt werden kann.

Der Transportwagen 124₁ dient zur Aufnahme der Ladungsträger 12. Die Trägerrollen 132 können mit einer nicht dargestellten Antriebseinheit angetrieben sein, so dass die Ladungsträger 12 an einem Ende einer Etage auf die Trägerrollen 132 aufgelegt und innerhalb dieser Etage weiterbewegt werden können, bis dass sie sich in der gewünschten Position befinden.
Wie insbesondere aus der Figur 9B hervorgeht, sind die ersten und zweiten Trägerrollen 132 beabstandet zueinander angeordnet. Der Transportwagen 124₁ weist demnach keine durchgehenden Trägerrollen auf. Zumindest einer der Seitenträger 126, 128 ist zum anderen der Seitenträger 126, 128 hin und von diesem weg bewegbar. Hierzu weist der Transportwagen 124₁ Führungsstangen 134 auf, die so angeordnet sind, dass sie nicht mit den Ladungsträgern 12 kollidieren. Der Abstand zwischen den Seitenträgern 126, 128 wird so gewählt, dass er im Wesentlichen der Länge oder der Breite der Ladungsträger 12 entspricht. Die Seitenträger 126, 128 führen die Ladungsträger 12 innerhalb des Transportwagens 124₁ und sorgen so für eine entsprechende Ausrichtung und Sicherung. Auch wenn es hierfür ausreicht, nur einen der Seitenträger 126, 128 bewegbar auszugestalten, bietet es sich an, die beiden Seitenträger 126, 128 synchronisiert aufeinander zu und voneinander weg zu bewegen. Auf diese Weise ist sichergestellt, dass der Transportwagen 124₁ gleichmäßig beladen und die Gefahr des Umkippens aufgrund einer einseitigen Beladung gering gehalten wird.

Der Transportwagen 124₁ ist mit Rädern 136 ausgestattet, so dass der Transportwagen 124₁ von einem Mitarbeiter bewegt werden kann. Darüber hinaus weist der Transportwagen 124₁ eine Verfahreinheit 138 auf, mit welcher der Transportwagen 124₁ ohne die Mithilfe eines Mitarbeiters insbesondere innerhalb der Werkhalle und damit für den innerbetrieblichen Transport verfahrbar ist. Hierzu umfasst der Transportwagen 124₁ eine Antriebseinheit 140. Weiterhin können Induktionsschleifen oder dergleichen im Boden der Werkhalle verlegt sein, um den Weg, entlang welchem der Transportwagen 124₁ verfahren wird, vorzugeben.

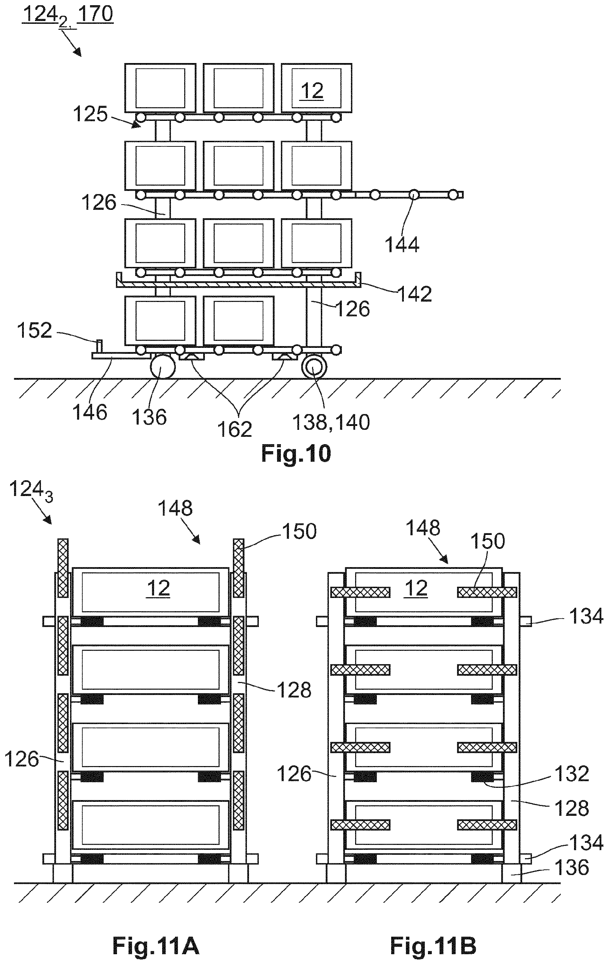

In Figur 10 ist ein zweites Ausführungsbeispiel des Transportwagens 124₂ anhand einer prinzipiellen Darstellung illustriert. In diesem Ausführungsbeispiel ist der Transportwagen 124₂ mit einer Auffangwanne 142 ausgestattet, mit welchem Flüssigkeiten oder Feststoffe, die bei der Herstellung der Ladegüter verwendet werden und sich erst langsam vom Ladegut trennen, aufgefangen werden können. Darüber hinaus weist der Transportwagen 124₂ zumindest einen Verlängerungsabschnitt 144 auf, welches im dargestellten Ausführungsbeispiel in der dritten Etage angeordnet ist. Auf diese Weise kann die Kapazität des Transportwagens 124₂ vergrößert werden. Es ist aber auch möglich, den Verlängerungsabschnitt 144 insbesondere für die Auflage der Ladungsträger 12 bei der Übergabe zu verwenden. Die Übergabe der Ladungsträger 12 auf den Transportwagen 124₂ kann aufgrund einer besseren Zugänglichkeit vereinfacht werden. Dabei kann der Verlängerungsabschnitt 144 in die Seitenträger 126, 128 gesteckt werden. Es kann vorgesehen sein, dass der Verlängerungsabschnitt 144 zwischen den verschiedenen Etagen des Transportwagens 124₂ bewegbar ist.

Weiterhin ist der Transportwagen 124₂ mit einer Kupplungseinrichtung 146 ausgerüstet. Mit der Kupplungseinrichtung 146 kann der Transportwagen 124₂ mit einem Kupplungspartner gekuppelt werden. Ein Kupplungspartner kann beispielsweise die in Figur 1A gezeigte Vorrichtung 10₁ zum Bewegen von Ladungsträgern 12 oder ein nicht dargestellter weiterer Transportwagen 124 sein. Wie erwähnt, weist die Vorrichtung 10₁ das Kupplungselement 54 auf, welche allein infolge eines entsprechenden Positionierens des Transportwagens 124₂ mit der Kupplungseinrichtung 146 gekuppelt werden kann. Die Kupplungseinrichtung 146 und das Kupplungselement 54 können so ausgebildet sein, dass der Transportwagen 124₂ im gekuppelten Zustand in seiner Position fixiert wird und nicht wegrollen kann. Darüber hinaus kann ein elektrisch leitender Kontakt zwischen dem Kupplungselement 54 und der Kupplungseinrichtung 146 im gekuppelten Zustand hergestellt werden, so dass elektrische Energie und elektrische Signale zwischen der Vorrichtung 10₁ und dem Transportwagen 124₂ ausgetauscht werden können. Darüber hinaus sind pneumatische, elektromagnetische und/oder hydraulische Anschlüsse 152 in der Kupplungseinrichtung 146 und dem Kupplungselement 54 integriert, so dass Druckluft und/oder Hydraulikflüssigkeit und/oder elektrische Energie übertragen werden können.

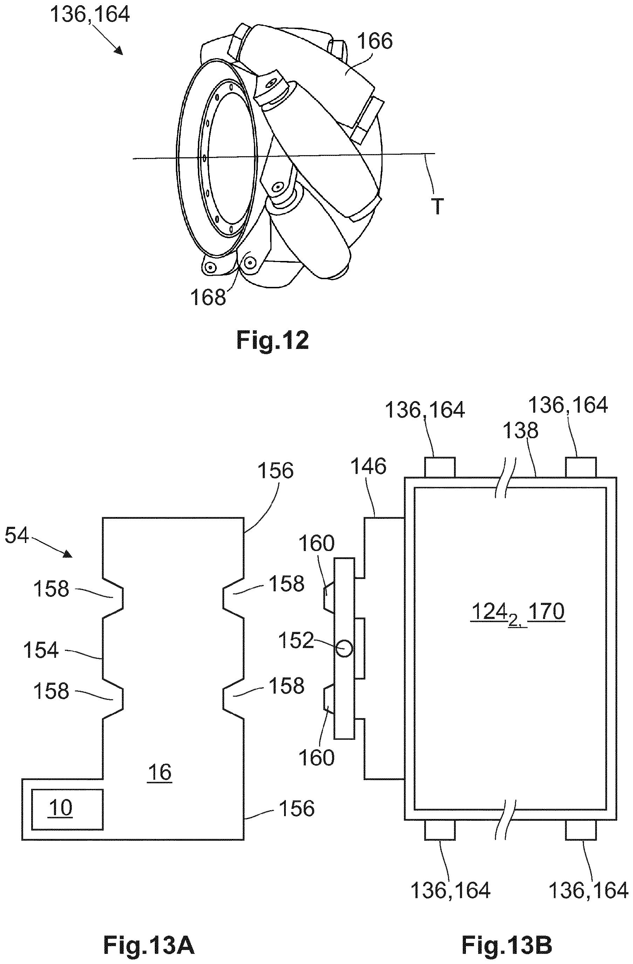

In den Figuren 13A und 13B ist eine Ausführungsform des Kupplungselements 54 und der Kupplungseinrichtung 146 anhand einer prinzipiellen Draufsicht näher gezeigt. Das Kupplungselement 54 ist mit der Bodenplatte 16 der Vorrichtung 10₁ verbunden und weist an einer linken Kante 154 und einer rechten Kante 156 jeweils zwei Ausnehmungen 158 auf, in welche zwei korrespondierende Vorsprünge 160 der Kupplungseinrichtung 146 einbringbar sind. Wenn die Vorsprünge 160 in die Ausnehmungen 158 eingebracht sind, ist der Transportwagen 124 gegenüber der Vorrichtung 10₁ eindeutig positioniert und ausgerichtet. Nicht dargestellt ist eine Ausführungsform der Kupplungseinrichtung 146, in welcher anstelle der Ausnehmungen 158 vertikal verlaufende Stangen vorgesehen sind, in welche korrespondierende Klauen des Transportwagens 124 eingreifen. Die Klauen können an verschiedenen Höhen des Transportwagens 124 angebracht sein. Eine Positionierung und Ausrichtung des Transportwagens 124 ist dennoch möglich, solange die Klauen in die Stangen eingreifen können.

Wie aus Figur 10 hervorgeht, weist der Transportwagen 124₂ eine Anzahl von Aufnahmeabschnitten 162 auf. An diesen Aufnahmeabschnitten 162 kann ein hier nicht dargestellter Gabelstapler den Transportwagen 124₂ ergreifen, anheben und durch die Werkhalle fahren. Die Gabelstapler können selbst autonom fahren, so dass auf diese Weise der Transportwagen 124₂ automatisch verfahren werden kann, ohne dass hierfür eine Verfahreinheit 138 oder eine Antriebseinheit 140 benötigt werden. Mit dem Anheben kann auch eine 360°-Rundumsicht für nicht gezeigte, am Transportwagen 124₂ angeordnete Positionssensoren bereitgestellt werden, die für den reibungslosen Betrieb von fahrerlosen Transportsystemen (FTS) entscheidend ist.

In den Figuren 11A und 11B ist ein drittes Ausführungsbeispiel des erfindungsgemäßen Transportwagens 124₃ jeweils in einer Vorderansicht gezeigt. In diesem Ausführungsbeispiel weist der Transportwagen 124₃ eine Verriegelungseinrichtung 148 auf, mit welcher die Ladungsträger 12, die im Transportwagen 124₃ angeordnet sind, gesichert werden können. Die Verriegelungseinrichtung 148 weist eine Anzahl von Sperrbalken 150 auf, welche an den Seitenträgern 126, 128 verstellbar befestigt sind. In Figur 11A befindet sich die Verriegelungseinrichtung 148 in einer Offenstellung, in welcher die Sperrbalken 150 vertikal ausgerichtet sind, so dass die Ladungsträger 12 von vorne oder von hinten auf den Transportwagen 124₃ befördert und von diesem wieder entnommen werden können. In Figur 11B befindet sich die Verriegelungseinrichtung 148 in der Verriegelungsstellung, in welcher die Sperrbalken 150 horizontal ausgerichtet sind, so dass sie die Ladungsträger 12 im Transportwagen 124₃ sichern. Das Verstellen der Sperrbalken 150 zwischen der Offenstellung und der Verriegelungsstellung kann mittels eines zentralen, hier nicht dargestellten Hebels erfolgen, so dass das Verstellen schnell und einfach erfolgen kann. Alternativ oder kumulativ kann das Verstellen auch mittels eines nicht dargestellten Motors oder Stellzylinders erfolgen. Ebenfalls nicht dargestellt ist eine Ausführungsform des Transportwagens 124, bei welchen die Sperrbalken 150 nicht drehbar am Transportwagen 124 befestigt sind, sondern in senkrechter Richtung bewegbar sind. In dieser Ausführungsform entspricht die Verriegelungsstellung derjenigen, die in Figur 11B gezeigt ist. Um in die Offenstellung zu gelangen, werden die Sperrbalken 150 bezogen auf die in Figur 11B gewählte Darstellung nach unten verschoben, bis dass sie mit den Trägerrollen 132 fluchten oder soweit unter die Trägerrollen 132 positioniert werden, so dass die Ladungsträger 12 aus dem Transportwagen 124 entnommen werden können. In dieser Ausführungsform können zwei Sperrbalken 150, die auf derselben Etage des Transportwagens angeordnet sind, zu einem durchgängigen Sperrbalken 150 zusammengefasst werden.

In Figur 12 ist ein als Mecanum-Rad 164 ausgeführtes Rad 136 anhand einer perspektivischen Darstellung gezeigt. Auf dem Umfang des Mecanum-Rads 164 sind mehrere, in diesem Fall tonnenförmige Rollen 166 in einem Winkel von 45 Grad zur Drehachse T des gesamten Mecanum-Rads 164 angeordnet und an Befestigungsabschnitten 168 drehbar gelagert. Ausschließlich diese Rollen 166 stellen den Kontakt zum Boden her. Diese Rollen 166 haben keinen direkten Antrieb und können sich frei um ihre schräge Lagerachse drehen. Mittels der Mecanum-Räder 164 kann der Transportwagen 124, ob mit eigenem Antrieb oder von einem Mitarbeiter, omnidirektional bewegt werden, ohne dass eine Lenkvorrichtung benötigt wird.

Bezugnehmend auf die Figur 13B sind die Räder 136 der Verfahreinheit 138 als Mecanum-Räder 164 ausgeführt. Zudem ist aus der Figur 13B zu erkennen, dass der Transportwagen 124₂ ein Speicherregal 170 aufweist, welches separat von der Verfahreinheit 138 ausgeführt ist. Das Speicherregal 170 umfasst die Seitenträger 126, 128, die hieran befestigten Trägerrollen 132 und die Auffangwanne 142. Das Speicherregal 170 kann beispielsweise mittels eines nicht dargestellten Gabelstaplers unter Verwendung der Aufnahmeabschnitte 162 auf die insbesondere autonom fahrende Verfahreinheit 138 abgestellt werden. Die Verfahreinheit 138 kann daher für verschiedene Speicherregale 166 verwendet werden.

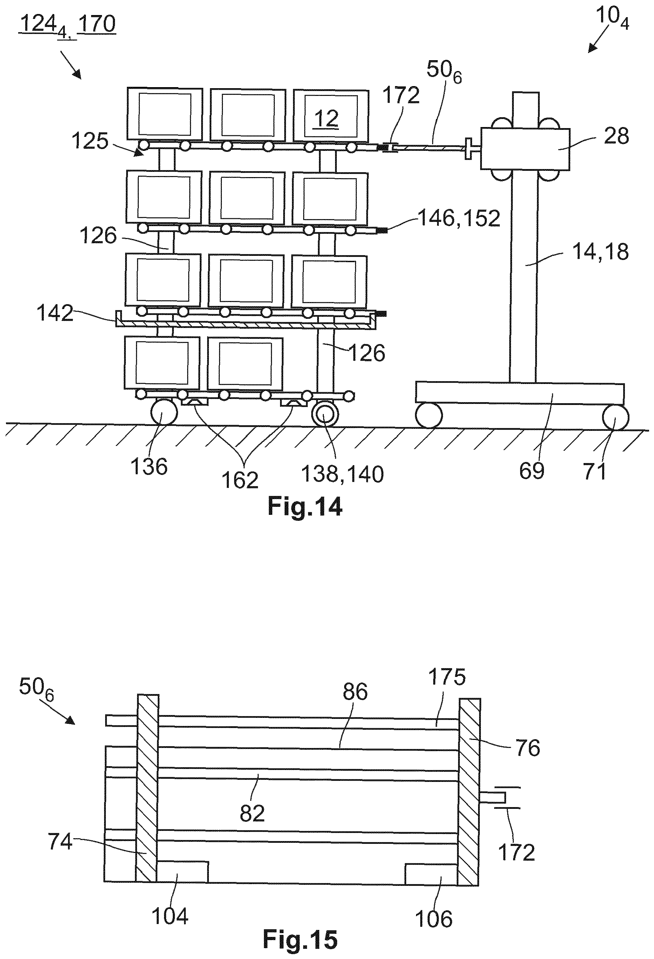

In Figur 14 ist ein viertes Ausführungsbeispiel der erfindungsgemäßen Vorrichtung 10₄ dargestellt, welche den Transportwagen 124₄ nach einem vierten Ausführungsbeispiel umfasst. Der wesentliche Unterschied zum dritten Ausführungsbeispiel liegt in der Gestaltung der Kupplungseinrichtung 146. In diesem Fall ist die Kupplungseinrichtung 146 nicht am Boden des Transportwagens 124₄ angeordnet. Vielmehr ist in jeder Etage des Transportwagens 124₄ jeweils eine Gruppe von Anschlüssen 152 angeordnet, welche jeweils mit einem Gegenstück 172 verbunden werden kann, welches am Adapter 50₆ angeordnet ist, der in Figur 15 gesondert dargestellt ist. Im gekoppelten Zustand können elektrische Energie, Steuersignale und/oder pneumatische oder hydraulische Fluide zwischen dem Transportwagen 124₄ und dem Adapter ausgetauscht werden. Im vierten Ausführungsbeispiel wird jeweils nur eine Etage des Transportwagens 124₄ gekoppelt, so dass beispielsweise nur die Antriebseinheiten der Trägerrollen 132 dieser Etage mit Strom versorgt werden, um die betreffenden Trägerrollen 132 anzutreiben. Das Zu- und Abführen der Ladungsträger 12 zum bzw. vom Transportwagen 124₄ unter Verwendung der angetriebenen Trägerrollen 132 ist hierdurch möglich, ohne dass zwischen den Etagen entsprechende Leitungen verlegt werden müssen.

Das in Figur 15 dargestellte sechste Ausführungsbeispiel des Adapters 50₆ weist gegenüber dem in Figur 6 dargestellten dritten Ausführungsbeispiel 50₃ folgenden weiteren Unterschied auf: Während der in Figur 6 dargestellte Adapter 50₃ den ersten und den zweiten Anschlag 98, 100 aufweist, verfügt der in Figur 15 dargestellte Adapter 50₆ über eine durchgehende Haltestange 175. Hierdurch können auch sehr schmale Ladungsträger 12 gegen Herausfallen gesichert werden, ohne dass hierzu die erste Seitenwand 74 soweit zur zweiten Seitenwand 76 bewegt werden muss, bis dass beide Anschläge 98, 100 mit dem Ladungsträger 12 zusammenwirken können. Das Vorsehen der durchgehenden Haltestange 175 bietet sich insbesondere für Adapter 50 an, die über unbewegliche Seitenwände 74, 76 verfügen. Die in Figur 7 dargestellte zweite Gruppe Q2 der Durchgangslöcher 96 kann dazu verwendet werden, die Haltestange 175 auf unterschiedlichen Höhen am Adapter 506 anzuordnen, um eine Anpassung an unterschiedlich hohe Ladungsträger 12 umsetzen zu können. Dabei können die Durchgangslöcher 96 auch als Langlöcher ausgestaltet sein, so dass eine sehr präzise Höheneinstellung möglich ist.

Sämtliche Räder 71, 136 können auch als Mecanum-Räder 164 ausgestaltet sein (vgl. Figur 13B).

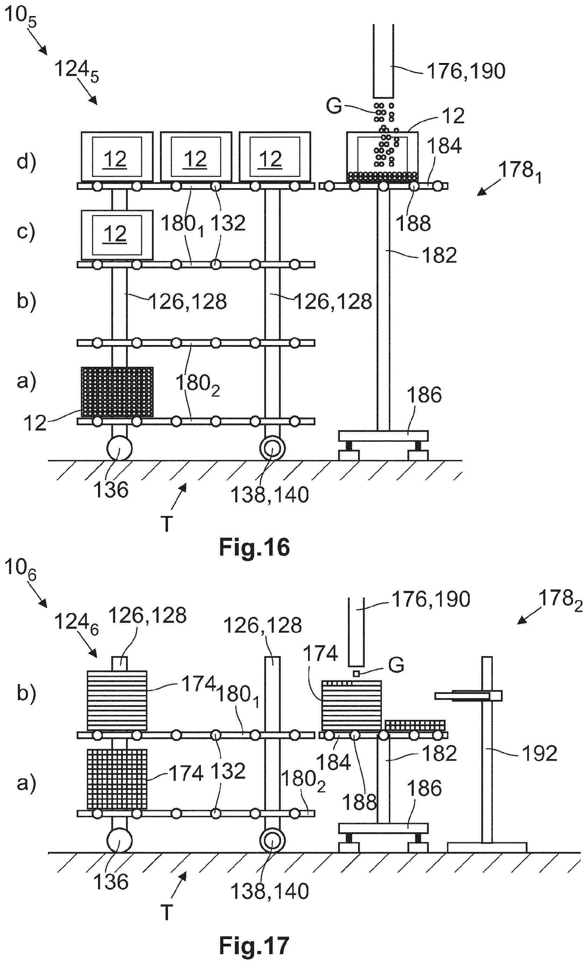

In Figur 16 ist ein fünftes Ausführungsbeispiel einer erfindungsgemäßen Vorrichtung 10₅ zum Führen von Ladungsträgern 12 zu einer Be- und/oder Entladestation 176 und von dieser weg anhand einer prinzipiellen Darstellung gezeigt. Die Vorrichtung 10₁ umfasst den Transportwagen 124₅ nach einem fünften Ausführungsbeispiel und eine Bewegungseinrichtung 178₁ nach einem ersten Ausführungsbeispiel. Der Aufbau des Transportwagens 124₅ entspricht weitgehend denjenigen nach den zuvor beschriebenen Ausführungsbeispielen. Insgesamt weist der Transportwagen 124₅ vier Ebenen a) bis d) auf. In je vier Ebenen a) bis d) sind an den ersten Seitenträgern 126 jeweils sechs erste Trägerrollen 132 und an den zweiten Seitenträgern 128 jeweils sechs zweite Trägerrollen 132 befestigt. Die Trägerrollen 132 der Ebenen c) und d) bilden jeweils einen ersten Aufnahmebereich 180₁ und die Trägerrollen 132 der Ebenen a) und b) jeweils einen zweiten Aufnahmebereich 180₂, auf welchem die in diesem Fall kistenförmigen Ladungsträger 12 abgelegt werden können. Die Trägerrollen 132 sind mittels einer nicht dargestellten Antriebseinheit antreibbar.

Die Bewegungseinrichtung 178₁ weist eine Hubsäule 182 auf, mit welcher ein Querträger 184 angehoben und abgesenkt werden kann. Die Hubsäule 182 ist mittels einer Bodenplatte 186 gelagert. Am Querträger 184 sind in diesem Fall fünf antreibbare Querträgerrollen 188 befestigt, wobei auch eine andere Anzahl von Querträgerrollen 188 eingesetzt werden kann.

Die Vorrichtung 10₅ nach dem ersten Ausführungsbeispiel wird auf folgende Weise betrieben:
Der Transportwagen 124₅ wird in einer beliebigen Position mit in diesem Fall insgesamt sechs Ladungsträgern 12 beladen, die auf den beiden ersten Aufnahmebereiche 180₁ abgelegt werden. Die Ladungsträger 12 befinden sich in einem ersten Zustand, in welchem sie im dargestellten Beispiel leer sind, also kein Ladegut G aufnehmen. Sie können aber im ersten Zustand auch mit Ladegut G befüllt sein. Der beladene Transportwagen 124₅ wird in diesem Fall automatisch mittels der Verfahreinheit 138 in eine in Figur 16 dargestellte Übergabeposition T gefahren. Die Übergabeposition T zeichnet sich dadurch aus, dass eine Übergabe der Ladungsträger 12 vom Transportwagen 124₅ zu der Bewegungseinrichtung 178₁ und umgekehrt möglich ist.

Der Querträger 184 der Bewegungseinrichtung 178₁ wird mittels der Hubsäule 182 so verfahren, dass er mit einem der ersten Aufnahmebereichen 180₁ fluchtet. Anschließend werden die betreffenden Trägerrollen 132 des Transportwagens 124₅ in Drehung versetzt, so dass einer der Ladungsträger 12 vom Transportwagen 124₅ auf die Querträgerrollen 188 bewegt wird, die ebenfalls entsprechend in Drehung versetzt werden. Im dargestellten Fall ist der zweite Ladungsträger 12 der Ebene c) übergeben worden. Anschließend wird der Querträger 184 zu der Be- und/oder Entladestation 176 hin bewegt, was in diesem Fall durch Anheben des Querträgers 184 erfolgt. Wie in Figur 16 dargestellt, kann die Be- und/oder Entladestation 176 beispielsweise ein Auslassrohr 190 umfassen, aus welchem das Ladegut G abgegeben werden kann. Der Ladungsträger 12 wird so dicht an die Be- und/oder Entladestation 176 heran bewegt, dass das Ladegut G sicher in den Ladungsträger 12 eingebracht werden kann. In diesem Fall ist die Be- und/oder Entladestation 176 nur zum Beladen der Ladungsträger 12 eingerichtet, nicht aber zu deren Entladen.

Nachdem der Ladungsträger 12 vollständig befüllt worden ist, befindet er sich im zweiten Zustand und wird auf eine der zweiten Aufnahmeabschnitte 180₂ des Transportwagens 124₁ abgelegt, wie es für den ersten Ladungsträger 12, welcher der Ebene c) entnommen worden ist, gezeigt ist. Dieser Ladungsträger 12 ist auf den zweiten Aufnahmebereich 180₂ der Ebene a) abgelegt worden. Hierzu wird der Querträger 184 entsprechend abgesenkt und die Querträgerrollen 188 und die Trägerrollen 132 in eine entsprechende Drehung versetzt, so dass der Ladungsträger 12 vom Querträger 184 an den betreffenden zweiten Aufnahmebereich 180₂ übergeben werden kann. Infolge des Befüllens ist der Ladungsträger 12 in den zweiten Zustand überführt worden. Ein Be- und/oder Entladen der Ladungsträger 12 auf dem ersten Aufnahmebereich 180₁ ist ebenfalls möglich.

Wie bereits erwähnt, können die Ladungsträger 12 auch im ersten Zustand mit dem Ladegut G befüllt sein. In diesem Fall soll das Ladegut G auf eine bestimmte Weise bearbeitet, beispielsweise gewaschen oder poliert werden. In diesem nicht dargestellten Fall ist die Be- und/oder Entladestation 176 so eingerichtet, dass sie das zu bearbeitende Ladegut G aus den Ladungsträgern 12 entnehmen, einer nicht dargestellten Bearbeitungsmaschine zuführen und das bearbeitete Ladegut G anschließend wieder in die Ladungsträger 12 einbringen kann. In diesem Fall wird der Ladungsträger 12 durch das Befüllen des bearbeiteten Ladeguts G in den zweiten Zustand überführt.

Sobald alle Ladungsträger 12 in den zweiten Zustand überführt und auf den zweiten Aufnahmebereich 180₂ abgelegt worden sind, kann der Transportwagen 124₁ aus der Übergabeposition T weggefahren werden, beispielsweise zu einem Lager, wo das bearbeitete Ladegut G gelagert oder verschickt wird. Sobald die Übergabeposition T frei geworden ist, kann ein weiterer Transportwagen 124₁ in die Übergabeposition T gefahren und die oben erläuterten Schritte erneut durchgeführt werden.

Im dargestellten Ausführungsbeispiel sind die ersten Aufnahmebereiche 180₁ in den Ebenen c) und d) und die zweiten Aufnahmeabschnitte 180₂ in den Ebenen a) und b) angeordnet. Im dargestellten Beispiel können pro Aufnahmebereich 180₁, 180₂ drei Ladungsträger 12 abgelegt werden, so dass der Transportwagen 124₁ mit insgesamt sechs Ladungsträgern 12 beladen ist. Beim Ausführen der oben genannten Schritte werden die Ladungsträger 12 von den Ebenen c) und d) in die Ebenen a) und b) bewegt. Es ist aber auch möglich, den Transportwagen 124₅ beispielsweise mit neun Ladungsträgern 12 zu beladen, die sich beispielsweise in den Ebenen b) bis d) befinden. In diesem Fall wird ein erster Aufnahmebereich 180₁, auf dem Ladungsträger 12 im ersten Zustand abgelegt werden, beim Durchführen der oben genannten Schritte zu einem zweiten Aufnahmebereich 180₂, auf dem Ladungsträger 12 im zweiten Zustand abgelegt werden. In diesem Fall kann der Transportwagen 124₁ stärker beladen werden, was die Effektivität seines Einsatzes steigert.

In Figur 17 ist ein sechstes Ausführungsbeispiel der erfindungsgemäßen Vorrichtung 10₆ gezeigt. In diesem Fall werden stapelbare, tablettförmige Trays 174 verwendet. Die Vorrichtung 10₆ umfasst einen Transportwagen 124₆ nach einem sechsten Ausführungsbeispiel, der nur die Ebenen a) und b) aufweist. In der Ebene b) sind die ersten Aufnahmebereichen 180₁ und in der Ebene a) die zweiten Aufnahmeabschnitte 180₂ angeordnet. Die prinzipielle Handhabung der Trays 174 entspricht derjenigen, die für die in Figur 16 gezeigten Ladungsträger 12 erläutert worden ist.

Aufgrund der Tatsache, dass die Trays 174 stapelbar sind, ergeben sich jedoch einige Unterschiede: Wie aus der Figur 17 hervorgeht, sind die Trays 174 auf mehrere, in diesem Fall drei Stapel verteilt. Der Transportwagen 124₆ wird so beladen, dass die drei Stapel von in diesem Fall leeren Trays 174 auf dem ersten Aufnahmebereich 180₁ abgelegt werden. Die leeren Trays 174 befinden sich im ersten Zustand. Befindet sich der Transportwagen 124₁ in der Übergabeposition T, wird einer der Stapel durch ein entsprechendes Drehen der Trägerrollen 132 und der Querträgerrollen 188 an die Bewegungseinrichtung 178₂ übergeben. Die Trays 174 weisen voneinander getrennte Aufnahmeräume auf, in welche üblicherweise ein einzelnes Ladegut G abgelegt wird. Hieraus ergibt sich der Umstand, dass nur das Tray 174 eines Stapels beladen werden kann, welches nicht von einem anderen Tray 174 nach oben verdeckt ist. In Figur 17 ist zu sehen, dass die Bewegungseinrichtung 178₂ nach dem zweiten Ausführungsbeispiel eine Greifeinrichtung 192 umfasst, mit welcher die Trays 174 erfasst und von einem Stapel auf einen weiteren Stapel bewegt werden können. Sobald das oberste Tray 174 des übergebenen Stapels befüllt ist, wird es von der Greifeinrichtung 192 erfasst und vom übergebenen Stapel auf einen weiteren Stapel transportiert. Folglich sind während des Befüllens der Trays 174 zwei Stapel auf dem Querträger 184 vorhanden. Nachdem alle Trays 174 befüllt und damit in den zweiten Zustand überführt sind, ist nur noch ein Stapel auf dem Querträger 184 vorhanden, der ausschließlich befüllte Trays 174 aufweist. Dieser Stapel wird auf dem zweiten Aufnahmebereich 180₂ des Transportwagens 124₆ abgelegt.

Alternativ kann die Greifeinrichtung 192 beispielsweise nur die oberen drei Trays 174 anheben. Anschließend wird der Stapel mit den unteren sieben Trays 174 durch ein entsprechendes Drehen der Querträgerrollen 188 so bewegt, dass das oberste Tray 174 des Stapels für die Be- und Entladestation 176 zugänglich ist. Das oberste der sieben Trays 174 wird dann be- und entladen. Der Stapel wird dann zurück in die Ausgangsstellung gefahren und die übrigen oberen drei Trays 174 von der Greifeinrichtung 192 wieder abgelegt. In diesem Fall ist nur ein Stapel auf dem Querträger 184 vorhanden, da die Greifeinrichtung 192 die oberen drei Trays 174 solange anhebt, bis der Stapel mit den sieben unteren Trays 174 wieder in der Ausgangsposition angelangt ist. Sofern notwendig, können die oberen drei Trays 174 von der Greifeinrichtung 192 zwischenzeitlich auf dem Querträger 184 abgelegt werden. Folglich kann jedes Tray 174 unabhängig von der Stapelreihenfolge be- und entladen werden.

Auch die Trays 174 können im ersten Zustand mit Ladegut G beladen sein, welches aus den Aufnahmeräumen zur Bearbeitung entnommen und anschließend wieder dort abgelegt wird. Die Trays 174 werden dann in den zweiten Zustand überführt, wenn sie ausschließlich mit dem bearbeiteten Ladegut G befüllt sind.

### Bezugszeichenliste

- 10: Vorrichtung
- 12: Ladungsträger
- 14: Führungssäule
- 15: bodennahes Ende
- 16: Bodenplatte
- 17: bodenfernes Ende
- 18: erster Abschnitt
- 20: zweiter Abschnitt
- 22: Unterabschnitt
- 24: Ausleger
- 26: Gehäuse
- 28: Schlitten
- 30: Räder
- 32: Antriebseinrichtung
- 34: Abstützmittel
- 36: Kette, Riemen
- 38: erstes Ende
- 40: erste Umlenkrolle
- 42: zweite Umlenkrolle
- 44: zweites Ende
- 46: elastisches Element
- 48: Anschlussflansch
- 49: freies Ende
- 50, 50₁ bis 50₅: Adapter
- 52: Leitblech
- 53: Sicherungsbolzen
- 54: Kupplungselement
- 55: Hohlraum
- 56: Gehäusekasten
- 57: Abrollflächen
- 58: Schenkel
- 59: Umlenkabschnitt
- 60: Sicherungsabschnitte
- 61: Zahnstange
- 62: Ritzel
- 63: weiteres Ritzel
- 64: Abstützmittel-Umlenkrolle
- 65: Umlenkrolle
- 66: Sicherheitseinrichtung
- 67: Sperrverzahnung
- 68: Sicherungselement
- 69: Fahrwerk
- 70: Vorspannmittel
- 71: Räder
- 72: Gegenhalter
- 73: Durchgangsöffnung
- 74: erste Seitenwand
- 76: zweite Seitenwand
- 78: Auflageabschnitt
- 80: Plattenboden
- 82: Fuge
- 84: Verstelleinrichtung
- 86: Rückwand
- 88: Sensor
- 90: Lesekopf
- 92: Wandabschnitt
- 94: Vorspanneinrichtung
- 96: Durchgangsloch
- 98: erster Anschlag
- 100: zweiter Anschlag
- 10₂: Erweiterungsabschnitt
- 104: erste Rolle
- 106: zweite Rolle
- 108: Verlängerungskufe
- 110: Schütteinrichtung
- 112: Führungsabschnitt
- 114: Schüttverjüngung
- 116: Langloch
- 118: Befestigungsmittel
- 120: Auffangwanne
- 122: Abflussloch
- 124, 124₁ bis 124₂: Transportwagen
- 125: Trägereinrichtung
- 126: erster Seitenträger
- 128: zweiter Seitenträger
- 132: Trägerrolle
- 134: Führungsstange
- 136: Rad
- 138: Verfahreinheit
- 140: Antriebseinheit
- 142: Auffangwanne
- 144: Verlängerungsabschnitt
- 146: Kupplungseinrichtung
- 148: Verriegelungseinrichtung
- 150: Sperrbalken
- 152: Anschlüsse
- 154: linke Kante
- 156: rechte Kante
- 158: Ausnehmung
- 160: Vorsprung
- 162: Aufnahmeabschnitt
- 164: Mecanum-Rad
- 166: Rollen
- 168: Befestigungsabschnitt
- 170: Speicherregal
- 172: Gegenstück
- 174: Tray
- 175: Haltestange
- 176: Be- und Entladestation
- 178, 178₁, 178₂: Bewegungseinrichtung
- 180: Aufnahmebereich
- 182: Hubsäule
- 184: Quersträger
- 186: Bodenplatte
- 188: Querttägerolle
- 190: Auslassrohr
- 192: Greifeinrichtung

- G1: erste Gruppe
- G2: zweite Gruppe
- G3: dritte Gruppe
- Q1: erste Gruppe
- Q2: zweite Gruppe

- α: Drehwinkel
- P: Pfeil
- T: Drehachse

## Patentansprüche

1. Vorrichtung zum Bewegen von Ladungsträgern (12), in welchen ein Ladegut einbringbar ist, umfassend
- eine Führungssäule (14) mit einem bodennahen Ende (15) und einem bodenfernen Ende (17),
- einen Schlitten (28), welcher entlang der Führungssäule (14) bewegbar ist und mit welchem zumindest ein Adapter (50) zum Aufnehmen von Ladungsträgern (12) verbindbar ist,
- zumindest ein entlang der Führungssäule (14) verlaufendes Abstützmittel (34),
- ein im Schlitten (28) angeordnetes oder mit dem Schlitten zusammenwirkendes und mittels einer Antriebseinrichtung (32) antreibbares Ritzel (62), welches zum Bewegen des Schlittens (28) entlang der Führungssäule (14) formschlüssig in das Abstützmittel (34) eingreift, und
- eine im Bereich des bodennahen Endes (15) an der Führungssäule (14) befestigte erste Umlenkrolle (42) zum Umlenken des Abstützmittels (34).

2. Vorrichtung nach Anspruch 1,
**dadurch gekennzeichnet, dass** das Abstützmittel (34) ein erstes Ende (38) und ein zweites Ende (44) aufweist, wobei das Abstützmittel (34) am ersten Ende (38) und/oder am zweiten Ende (44) mittels eines elastischen Elements (46) mit der Vorrichtung (10) verbunden ist.

3. Vorrichtung nach einem der vorherigen Ansprüche,
**dadurch gekennzeichnet, dass** die Führungssäule (14) einen im Wesentlichen senkrecht verlaufenden ersten Abschnitt (18) und einen kreisringsektorförmigen zweiten Abschnitt (20) aufweist.

4. Vorrichtung nach Anspruch 3,
**dadurch gekennzeichnet, dass** im oder am zweiten Abschnitt (20) zumindest ein Umlenkabschnitt (59) angeordnet ist, mit welchem das Abstützmittel (34) derart umlenkt wird, dass das Abstützmittel im (34) Wesentlichen der Form des zweiten Abschnitts (20) folgt.

5. Vorrichtung nach einem der Ansprüche 3 oder 4,
**dadurch gekennzeichnet, dass** im zweiten Abschnitt (20) eine Zahnstange (61) angeordnet ist, in welche ein mit der Antriebseinrichtung (32) antreibbares weiteres Ritzel (63) formschlüssig eingreift.

6. Vorrichtung nach einem der vorherigen Ansprüche,
**dadurch gekennzeichnet, dass** die Führungssäule (14) im Querschnitt H-förmig, T-förmig oder halb-H-förmig ausgebildet ist.

7. Vorrichtung nach Anspruch 6,
**dadurch gekennzeichnet, dass** die H-förmig oder halb-H-förmig ausgestaltete Führungssäule (14) zumindest zwei parallel zueinander verlaufende Schenkel (58) aufweist, zwischen denen eine Anzahl von Sicherungsabschnitten (60) angeordnet ist.

8. Vorrichtung nach einem der vorherigen Ansprüche,
**dadurch gekennzeichnet, dass** die Vorrichtung (10) eine mit dem Schlitten (28) zusammenwirkende oder im Schlitten (28) angeordnete Sicherheitseinrichtung (66) aufweist, die ein Sicherungselement (68) umfasst, welches für den Fall, dass sich der Schlitten (28) nicht mehr am Abstützmittel (34) abstützen kann, den Schlitten (28) an der Führungssäule (14) feststellt.

9. Vorrichtung nach den Ansprüchen 7 und 8,
**dadurch gekennzeichnet, dass**
- das Abstützmittel (34) als eine Kette (36) oder als ein Riemen ausgebildet ist und
- das Sicherungselement (68) gegenüber der Kette (36) oder dem Riemen mittels eines Vorspannmittels (70) vorgespannt ist und für den Fall, dass die Kette (36) oder der Riemen reißt, das Sicherungselement (68) zum Feststellen des Schlittens (28) an der Führungssäule (14) mit zumindest einem der Sicherungsabschnitte (60) zusammenwirkt.

10. Vorrichtung nach einem der vorherigen Ansprüche,
**dadurch gekennzeichnet, dass** die Vorrichtung (10) ein Fahrwerk (69) umfasst, mit welchem die Vorrichtung (10) verfahrbar ist.

11. Vorrichtung nach einem der vorherigen Ansprüche,
**dadurch gekennzeichnet, dass** der Adapter (50)
- eine erste Seitenwand (74) und eine zweite Seitenwand (76), die im Wesentlichen parallel zueinander verlaufen, sowie
- einen Auflageabschnitt (78), auf welchen zumindest ein Ladungsträger (12) auflegbar ist, umfasst, wobei
- zumindest eine der Seitenwände (74, 76) zur anderen der Seitenwände (74, 76) hin und von dieser weg bewegbar ist.

12. Vorrichtung nach einem der vorherigen Ansprüche,
**dadurch gekennzeichnet, dass** die Vorrichtung (10) einen Transportwagen (124) zum Aufnehmen und Transportieren der Ladungsträger (12) umfasst.

13. Vorrichtung nach Anspruch 12,
**dadurch gekennzeichnet, dass** der Transportwagen (124)
- eine Trägereinrichtung (125) mit zumindest einem ersten Seitenträger (126) und einem zweiten Seitenträger (128), und
- zumindest zwei erste Trägerrollen (132), die am ersten Seitenträger (126) befestigt sind und zumindest zwei zweite Trägerrollen (132), die am zweiten Seitenträger (128) befestigt sind, aufweist, wobei
- zumindest eine der Trägerrollen (132) antreibbar ist.

14. Vorrichtung nach Anspruch 13,
**dadurch gekennzeichnet, dass** zumindest einer der Seitenträger (126, 128) zum anderen der Seitenträger (126, 128) hin und von diesem weg bewegbar ist.

15. Vorrichtung nach einem der Ansprüche 12 bis 14,
**dadurch gekennzeichnet, dass** der Transportwagen (124) eine Kupplungseinrichtung (146) zum Kuppeln des Transportwagens (124) mit einem am Fahrwerk (69), am Schlitten (28) oder am Adapter (50) angeordneten Gegenstück (172) aufweist.
